# EUROPEAN PATENT APPLICATION

(11) **EP 1 693 848 A1**
(43) Date of publication of application: **23.08.2006**
(21) Application number: 06101710.9
(22) Date of filing: 15.02.2006
(51) Int. Cl.: G11B 27/034, G11B 27/10, G11B 27/32

(54) **Information storage medium, information recording method, and information playback method**

(30) Priority: 22.02.2005 JP 2005045888
(71) Applicant: KABUSHIKI KAISHA TOSHIBA, Tokyo (JP)
(72) Inventor: Yamagata, Yoichiro Toshiba Corporation, Tokyo 105-8001 (JP); Kamibayashi, Tooru Toshiba Corporation, Tokyo 105-8001 (JP); Toyama, Haruhiko Toshiba Corporation, Tokyo 105-8001 (JP); Taira, Kazuhiko Toshiba Corporation, Tokyo 105-8001 (JP); Mimura, Hideki Toshiba Corporation, Tokyo 105-8001 (JP); Ishibashi, YasuhiroToshiba Corporation, Tokyo 105-8001 (JP); Nakamura, Seiichi Toshiba Corporation, Tokyo 105-8001 (JP); Kobayashi, Takero Toshiba Corporation, Tokyo 105-8001 (JP); Shuto, Eita Toshiba Corporation, Tokyo 105-8001 (JP); Tsumagari, Yasufumi Toshiba Corporation, Tokyo 105-8001 (JP); Kaneko, Toshimitsu Toshiba Corporation, Tokyo 105-8001 (JP)
(74) Representative: Henkel, Feiler & Hänzel

(57) **Abstract**

To implement video objects to be played back by a method different from an existing playback sequence, playlist information which is played back first is recorded when the medium stores an advanced content. The playlist information may be configured to include object mapping information which is included in each title and is mapped on the title timeline, playback information for each title described based on the timeline, and so on. The object mapping information may describe timings (e.g., Loadstart '100' in FIG. 3) on the timeline to be loaded into a playback system for each predetermined information unit such as an application or object.

## Description

The invention relates to an information storage medium such as an optical disc, a method of recording information on this information storage medium, and a method of playing back this information storage medium.

In recent years, DVD-Video discs having high image quality and advanced functions, and video players that play back such discs have prevailed, and the range of choice for peripheral devices and the like used to play back such multi-channel audio has broadened. An environment that can personally implement a home theater and allows users to freely enjoy movies, animations, and the like with high image quality and high sound quality at home has become available. As described in Jpn. Pat. Appln. KOKAI Publication No. 10-50036, a playback apparatus which can superimpose various menus by changing, e.g., text colors and the like for playback video pictures from a disc has been proposed.

However, in recent years, along with the improvement of the image compression technique, a demand has arisen for realization of higher image quality from both the users and contents providers. In addition to realization of higher image quality, the contents providers may require an environment that can provide more attractive contents to users by upgrading and expanding the contents (e.g., more colorful menus, improvement of interactiveness, and the like) in contents such as menu screens, bonus video pictures, and the like as well as a title itself. Furthermore, some users may require to freely enjoy contents by playing back still picture data sensed by the user, subtitle text data acquired via Internet connection, and the like by freely designating their playback positions, playback regions, or playback times.

As described above, an environment that can provide more attractive contents to users by upgrading and expanding the contents (e.g., more colorful menus, improvement of interactiveness, and the like) in contents such as menu screens, bonus video pictures, and the like in addition to realization of higher image quality of a title itself may be required.

On the other hand, in order to produce contents with more colorful menus and high interactiveness, a technique different from the conventional contents production may be required. Hence, much time has to be spent to master such technique. For this reason, a contents providing environment that allows the conventional production technique to produce and can realize high image quality of a title itself (although functions are little more than the conventional technique) may be required at the same time.

In a conventional DVD-Video disc (ROM-based disc), video objects (called VOBs or EVOB_{S}) and/or their playback order are determined based on program chain (PGC in short) information which is set by the contents provider, is determined in advance, and is recorded on a disc. However, video objects to be played back and their playback order are determined in advance upon preparing that disc, and cannot be changed after the disc is prepared. That is, when the contents provider wants to change the video objects to be played back or their playback order, he or she should record PGC information changed by re-generating new management information of a DVD-Video disk on a new disc. The user has to re-purchase a DVD-Video disc that records the changed PGC information.

It is an object of the invention to implement video objects to be played back using playback control information implemented by a Markup language with respect to contents recorded on a conventional DVD-Video disc and their playback order control.

In other words, it is an object of the invention to provide an environment that can implement video objects to be played back by a method different from an existing playback sequence with respect to contents recorded on a read-only information storage medium such as a DVD-Video disc or the like, and their playback order control.

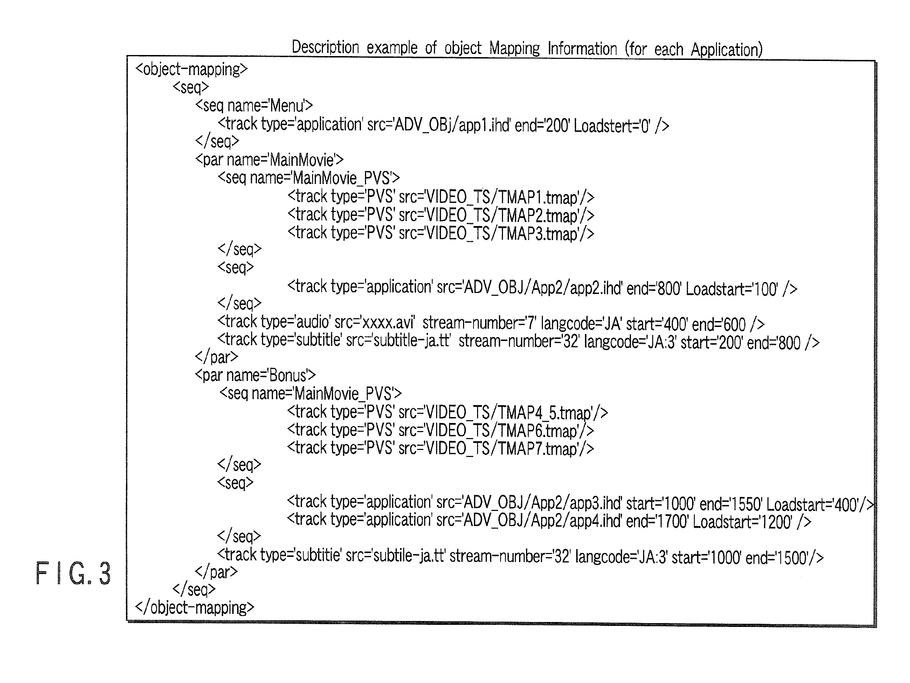

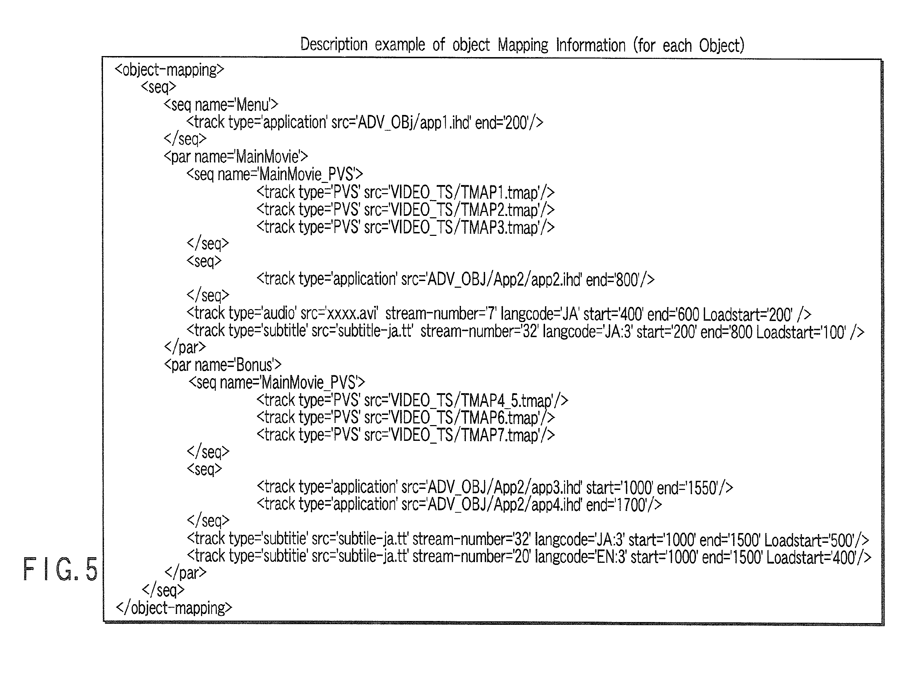

An information storage medium (1) according to an embodiment of the invention has a data area (12) storing a video data recording area (20) that includes a management area (30) which records management information (HDVMG) and an object area (40, 50) which records objects (HDVTS, AHDVTS) to be managed by this management information, and an advanced content recording area (21) which includes information (21A to 21E) different from the recording contents (30 to 50) of the video data recording area (20), and a file information area (11) that stores file information corresponding to the recording contents of the data area (12). Note that the data area (211A, 215A) is configured to store playlist information (Object Mapping Information; Playback Sequence; Configuration Information; and the like) which is played back first (prior to playback of advanced content) when the information storage medium has the advanced content. The playlist information is configured to include object mapping information which is included in each title of the objects to be played back and is mapped on the timeline of this title, and playback information (Playback Sequence) for each title described based on the timeline. Furthermore, the object mapping information is configured to describe the timings (Loadstart '100' in FIG. 3, Loadstart '200' in FIG. 5, and the like) on the timeline to be loaded to a playback system (its data cache or the like) for each predetermined information unit (Application or Object).

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary view for explaining the playback time periods and load time periods of respective objects on the timeline;
FIG. 2 is an exemplary flowchart for explaining a processing example of a playback system corresponding to an example of FIG. 1;
FIG. 3 is an exemplary view for explaining a description example (an example for each application) of object mapping information;
FIG. 4 is an exemplary view showing an example of the relationship between the timeline and playlist;
FIG. 5 is an exemplary view for explaining a description example (an example for each object) of object mapping information;
FIG. 6 is an exemplary view for explaining a system model of the playback system according to an embodiment of the invention;
FIG. 7 is an exemplary view for explaining an example of a playlist that implements a playback operation in the system model shown in FIG. 6;
FIG. 8 is an exemplary view for explaining a case wherein the example shown in FIG. 7 is allocated on the timeline;
FIG. 9 is an exemplary view for explaining the information contents recorded on disc-shaped information storage medium (optical disc, etc.) 1 according to the embodiment of the invention;
FIG. 10 is an exemplary view for explaining an example of a file system used to manage contents recorded on the disc-shaped information storage medium according to the embodiment of the invention;
FIG. 11 is an exemplary view for explaining the recording contents of an advanced contents recording area of the information contents recorded on disc-shaped information storage medium (optical disc, etc.) 1 according to another embodiment of the invention;
FIG. 12 is an exemplary view for explaining an example of the recording contents of an advanced HD video title set (AHDVTS) recording area of information contents recorded on disc-shaped information storage medium (optical disc, etc.) 1 according to still another embodiment of the invention;
FIG. 13 is an exemplary view exemplifying an outline of the playback system model of an advanced content;
FIG. 14 is an exemplary view for explaining an example of a data flow in the playback system model of the advanced content;
FIG. 15 is an exemplary view for explaining another example of the data flow in the playback system model of the advanced content;
FIG. 16 is an exemplary view for explaining still another example of the data flow in the playback system model of the advanced content;
FIG. 17 is an exemplary view for explaining still another example of the data flow in the playback system model of the advanced content;
FIG. 18 is an exemplary view for explaining an example of a blending model of picture outputs in the playback system model of the advanced content;
FIG. 19 is an exemplary block diagram for explaining an example of the internal structure of a playback apparatus according to an embodiment of the invention; and
FIG. 20 is an exemplary block diagram for explaining an example of the internal structure of a playback apparatus according to another embodiment of the invention.

An information storage medium, information playback method, and information playback apparatus according to an embodiment of the invention will be described hereinafter with reference to the accompanying drawings.

A playlist used so far describes a playback time period, but it does not consider any load time period (onto a data cache of a playback system), and it may be required to only load an object until the playback start timing. With this configuration, since the use size of the data cache for each time period cannot be measured, the use size and free size of the data cache cannot be recognized for each time period. Hence, in the embodiment of the invention, the playlist information is configured to describe a load time period to allow to measure (or detect) the use size of the data cache. By utilizing the measurement (detection) result of the data cache use size, effective contents creation is allowed upon authoring, and objects which need not be deleted are configured to be held on the data cache to improve the performance of a player. The embodiment of the invention will be described below.

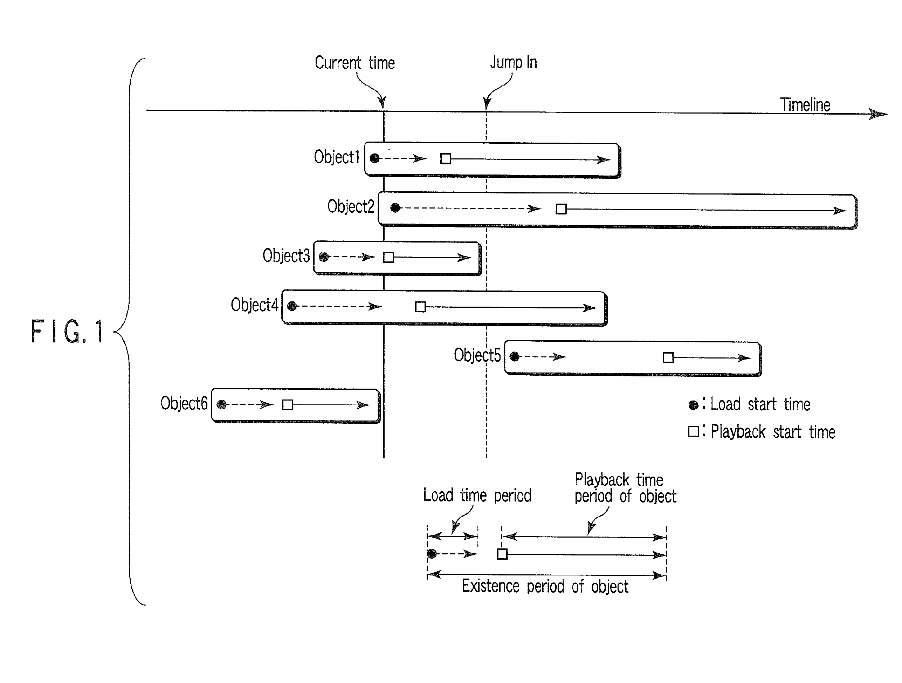

FIG. 1 is a view showing an example of the playback time periods and load start times of respective objects on the timeline. When a jump is made from the current time indicated by the solid line to a time indicated by the dotted line in FIG. 1, since playback of Object3 and Object6 is complete at that time, they need not be considered.

Also, since the load start time of Object5 has not been reached yet, it need not be considered, either. Loading of Object1 has already been started at the current time but is not completed. At the jump destination, since Object1 is one whose playback is underway, the same contents as Object1 stored as another file are loaded and played back. Since the jump is made to the middle of loading of Object2, playback of Object2 is started after loading is completed for a size corresponding to the jump destination from the load start time.

As for Object4, since the jump is made from the load completion time, the data cache is searched for the presence of its file, and if its presence is confirmed, Object4 is played back. Such processing can be implemented by adding a Loadstart attribute (see FIG. 3 or 5) to the description of the playlist.

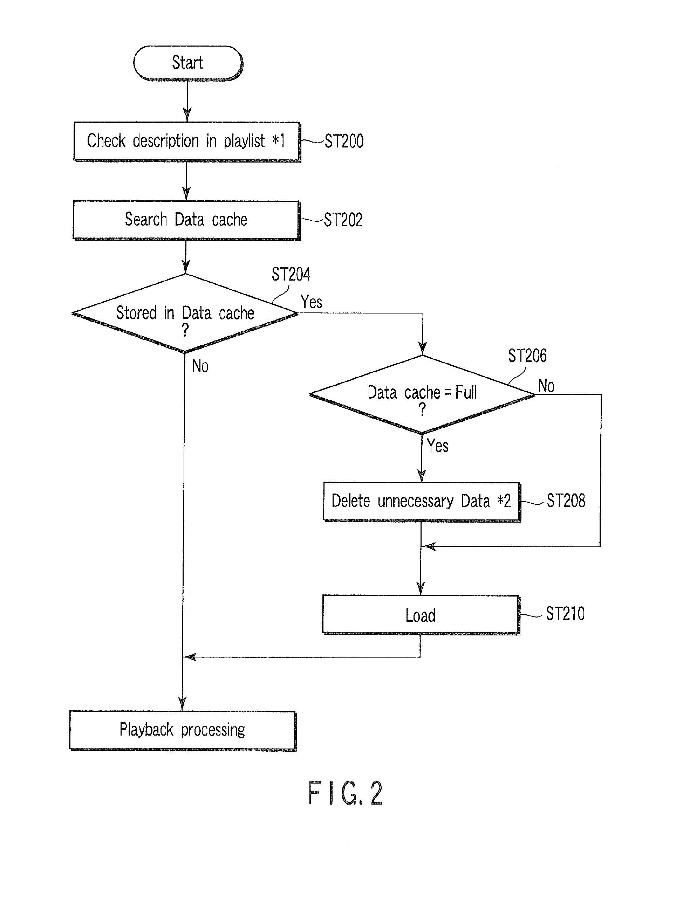

FIG. 2 is a flowchart corresponding to the aforementioned processing. If a jump operation is made, the description in the playlist is checked (block ST200), and the data cache is searched to determine as to whether or not objects are stored in the data cache (block ST202). If objects are stored in the data cache (YES in block ST204), playback is made using the stored objects.

If no object is stored in the data cache (NO in block ST204), it is checked if the data cache has a margin for storage (block ST206). If the data cache is full of data (YES in block ST206), unnecessary object are deleted (block ST208). To-be-used data is loaded from a prepared file onto the data cache (block ST210), and is played back.

If the data cache has a margin (NO in block ST206), the data is loaded onto the data cache (block ST210) without deleting any objects from the data cache, and is played back. With this control, even when the data cache size that can be used simultaneously is limited, if each apparatus has a data cache larger than that limited size and does not delete any stored contents, the contents stored in the data cache can be searched for and used if the contents are (or may be) required again as a result of, e.g., jump. Hence, by providing a sufficiently large data cache size, the performance of a player can be improved. In this way, apparatuses can be differentiated.

Furthermore, since the use size of the data cache for each time can be calculated (by adding a Loadstart attribute to the playlist), still another object can be set at a location where the data cache has a size margin upon creating contents, thus allowing efficient contents creation.

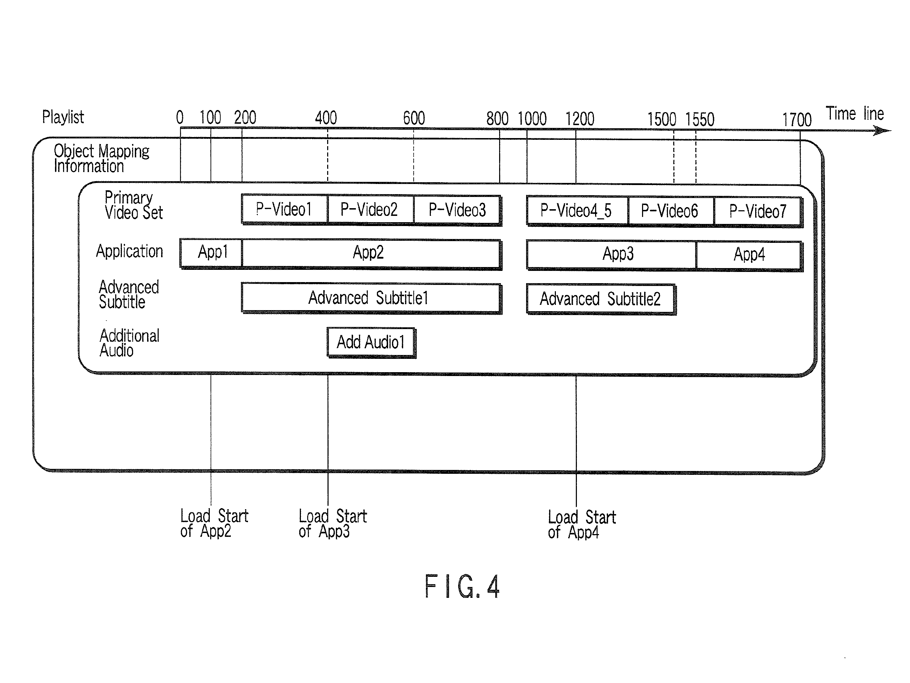

FIGS. 3 and 5 show practical examples of the playlist to which the Loadstart attribute is added. FIGS. 3 and 4 exemplify a case wherein Loadstart time periods are roughly prepared for respective applications. In this case, objects used in applications are loaded onto the data cache from load start times (Loadstart '0', Loadstart '100', Loadstart '400', Loadstart '1200', and the like in FIG. 3) at the same timing. Since Application1 "Loadstarts" from '0', it can be omitted (using Loadstart '0' as a default).

FIG. 5 shows an example load start times (Loadstart '200', Loadstart '100', Loadstart '500', Loadstart '400', and the like) are set for respective objects. With this description, more flexible control (than the example for respective Applications in FIG. 3) can be made. However, as the processing for loading and deleting respective objects are (or may be) required, the processing of the playback system becomes complicated. When the load start times are set for respective objects, the objects are deleted in turn from those which are loaded earlier in a simple example. However, in case of a special example, the deletion order may be specified. For example, certain limitations may be provided: an object which has a small size to some extent remains stored in the data cache without being deleted, an object which is assigned a plurality of times upon playback is not deleted, and so forth. Or an explicitly new attribute (used to designate whether or not to delete an object from the data cache) may be added.

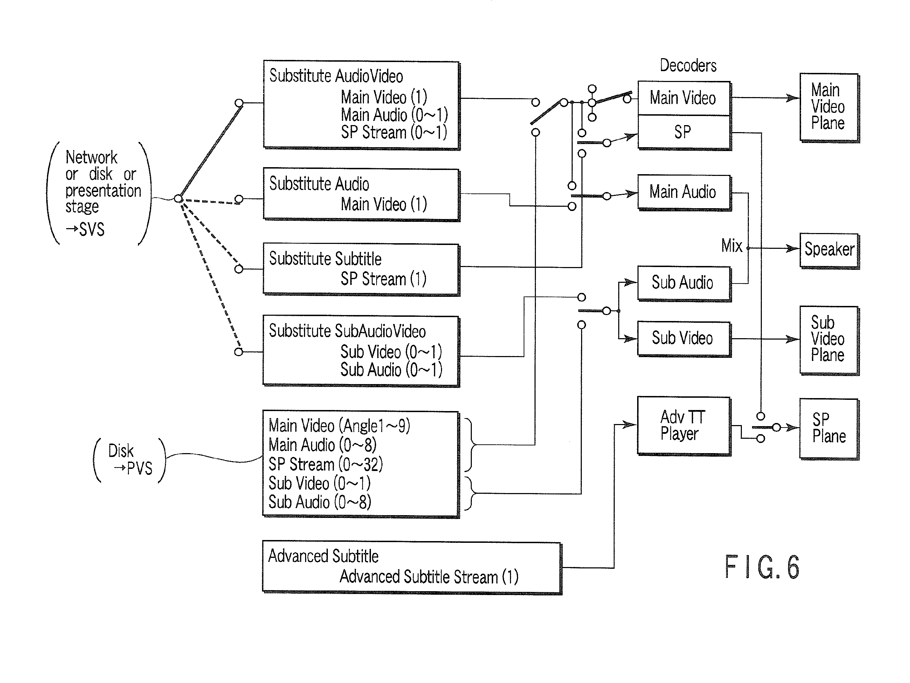

FIG. 6 shows a system model example. In this example, a PSV (Primary Video Set) on a disc includes nine Main Video Angle streams, eight or less Main Audio streams, 32 or less SP (Sub-picture) Streams, one or less Sub Video streams, and eight or less Sub Audio streams. As an SVS (Secondary Video Set) present on a network, disc, or persistent storage, four different SVS_{S}, i.e, Substitute AudioVideo (to add Main Video, Main Audio, and SP Streams), Substitute Audio (to add Main Audio streams), Substitute Subtitle (add SP streams), and Substitute SubAudioVideo (add Sub Video and Sub Audio streams) are selectively used in accordance with the use purposes. The number of streams that can be set are described in each parentheses in FIG. 6.

In case of Main Video, if both the Main Video stream of the PSV and that of the Substitute AudioVideo are present, one of them is input to a decoder, and they are not simultaneously used. The applies to a case wherein a plurality of Angle streams are present (they are not used at the same time), and they are selectively displayed. SP and Main Audio streams are similarly selected and decoded. These streams may be switched during playback. An Advanced Subtitle stream is decoded by an Adv TT player, and one of the Advanced Subtitle stream and SP Stream is selected if the SP Stream is available, and is displayed on an SP Plane (sub-picture display plane). In addition, Main and Sub Audio streams are mixed and input to a speaker, a Main Video stream is input to a Main Video Plane (main video display plane), and a Sub Video stream is input to a Sub Video Plane (sub video display plane), and are respectively played back.

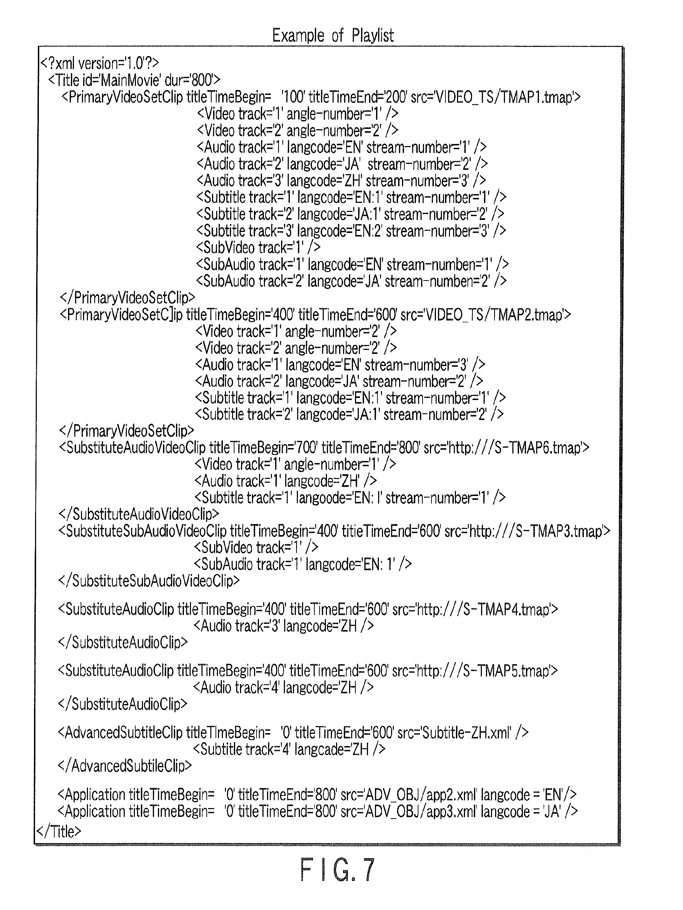

FIG. 7 shows an example of a playlist which implements such processes. A Title tag immediately below a root element defines an id of this Title and a duration '800' of a Title TimeLine to be set. Its child element sets the aforementioned PVS and SVS. Initially, PrimaryVideoSetClip defines the PSV. This PVS is set in a time period from 100 to 200 on the Title TimeLine, and is referred to by a TMAP1.tmp file. This PVS has two angles in a Video stream, and Angle1 and Angle2 are respectively set in track1 and track2. In an Audio stream, stream-number1, stream-number2, and stream-number3 are respectively set in track1, track2, and track3, which are respectively set with langcode = EN, JA, and ZH. Likewise, in a Subtitle stream, stream-number1, stream-number2, and stream-number3 are respectively set in track1, track2, and track3, which are respectively set with langcode = EN:1, JA:1, and EN:2. A Sub video stream is set in track1, and stream-number1 and stream-number2 in a Sub Audio stream are set in track1 and track2.

Likewise, PrimaryVideoSet is set from 400 to 600, SubstituteAudioVideo is set from 700 to 800, two SVSs, i.e., SubstituteSubAudioVideo and Substitute Audio are set from 400 to 600, and AdvancedSubtitle is set from 0 to 600 on the Title TimeLine. As Applications, two different applications, i.e., app2.xml and app3.xml are set from 0 to 800.

Note that a player may use the langcode of the Application, and may define a track having the same langcode as a default playback track. If no corresponding track is found, a track with a smallest track number may be defined as a default track, thus allowing compatible playback.

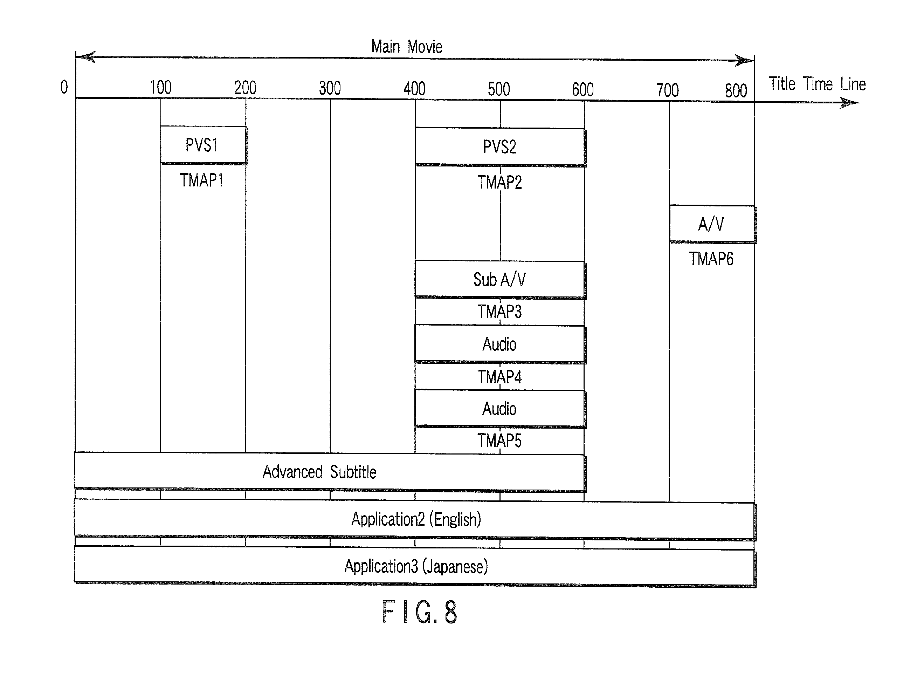

FIG. 8 is a view when this example is allocated on the Title TimeLine. Respective Clips include streams according to their Types. As for PSV2 and two Audio streams of the SVS allocated from 400 to 600 on the Title TimeLine, different track numbers are set (1 and 2 for the PVS; 3 and 4 for the SVS), thus switching streams without making the user recognize the PVS and SVS.

Even when the PVS includes streams, if these streams are not described as tracks in the playlist, the user cannot select such streams. Furthermore, by assigning track numbers to SVSs, they can be replaced. In this way, only when the conditions are met in the playlist script, playback can be permitted. Also, by changing the playlist (without changing any streams), the contents that can be played back can be controlled.

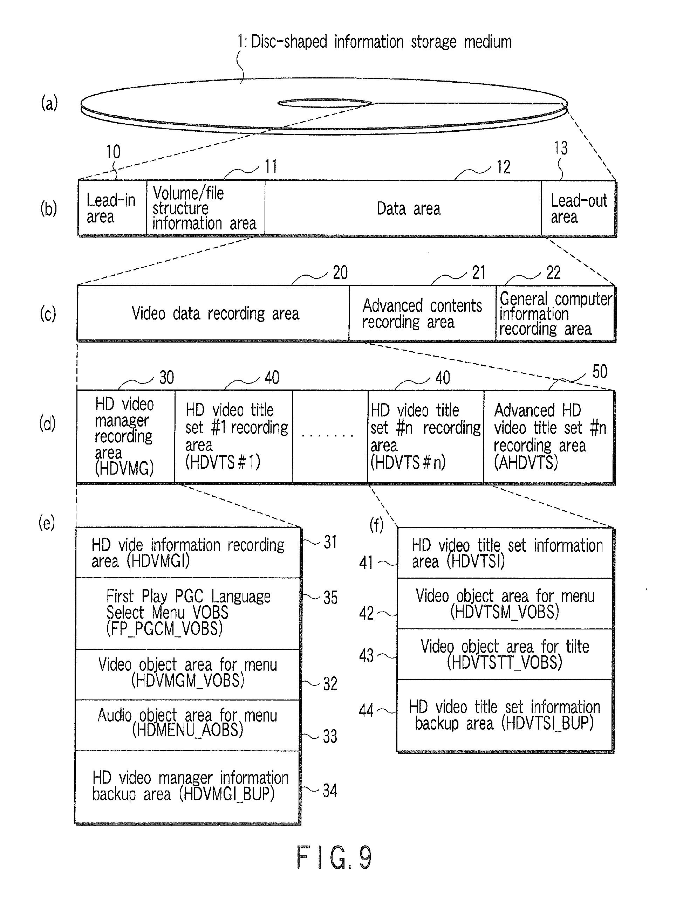

FIG. 9 is a view for explaining the information contents recorded on a disc-shaped information storage medium according to the embodiment of the invention. Information storage medium 1 shown in FIG. 9(a) can be configured by a high-density optical disc (a high-density or high-definition digital versatile disc: HD_DVD for short) which uses, e.g., a red laser of a wavelength of 650 nm or a blue laser of a wavelength of 405 nm (or less).

Information storage medium 1 includes lead-in area 10, data area 12, and lead-out area 13 from the inner periphery side, as shown in FIG. 9(b). Information storage medium 1 adopts the ISO9660 and UDF bridge structures as a file system, and has ISO9660 and UDF volume/file structure information area 11 on the lead-in side of data area 12.

Data area 12 allows mixed allocations of video data recording area 20 used to record DVD-Video contents (also called standard contents or SD contents), another video data recording area (advanced contents recording area used to record advanced contents) 21, and general computer information recording area 22, as shown in FIG. 9(c). (Note that the plural form "contents" includes the meaning of the singular form "content", and the singular form "content" is a representative singular form.)

Video data recording area 20 includes HD video manager (HDVMG: High Definition-compatible Video Manager) recording area 30 that records management information associated with the entire HD_DVD-Video contents recorded in video data recording area 20, HD video title set (HDVTS: High Definition-compatible Video Title Set: also called standard VTS) recording areas 40 which are arranged for respective titles, and record management information and video information (video objects) for respective titles together, and advanced HD video title set (AHDVTS: also called advanced VTS) recording area 50, as shown in FIG. 9(d).

HD video manager (HDVMG) recording area 30 includes HD video manager information (HDVMGI: High Definition-compatible Video Manager Information) area 31 that indicates management information associated with overall video data recording area 20, HD video manager information backup (HDVMGI_BUP) area 34 that records the same information as in HD video manager information area 31 as its backup, and menu video object (HDVMGM_VOBS) area 32 that records a top menu screen indicating whole video data recording area 20, as shown in FIG. 9(e).

In the embodiment of the invention, HD video manager recording area 30 newly includes menu audio object (HDMENU_AOBS) area 33 that records audio information to be output parallelly upon menu display. Furthermore, in the embodiment of the invention, an area of first play PGC language select menu VOBS (FP_PGCM_VOBS) 35 which is executed upon first access immediately after disc (information storage medium) 1 is loaded into a disc drive is configured to record a screen that can set a menu description language code and the like.

One HD video title set (HDVTS) recording area 40 that records management information and video information (video objects) together for each title includes HD video title set information (HDVTSI) area 41 which records management information for all contents in HD video title set recording area 40, HD video title set information backup (HDVTSI_BUP) area 44 which records the same information as in HD video title set information area 41 as its backup data, menu video object (HDVTSM_VOBS) area 42 which records information of menu screens for each video title set, and title video object (HDVTSTT_VOBS) area 43 which records video object data (title video information) in this video title set.

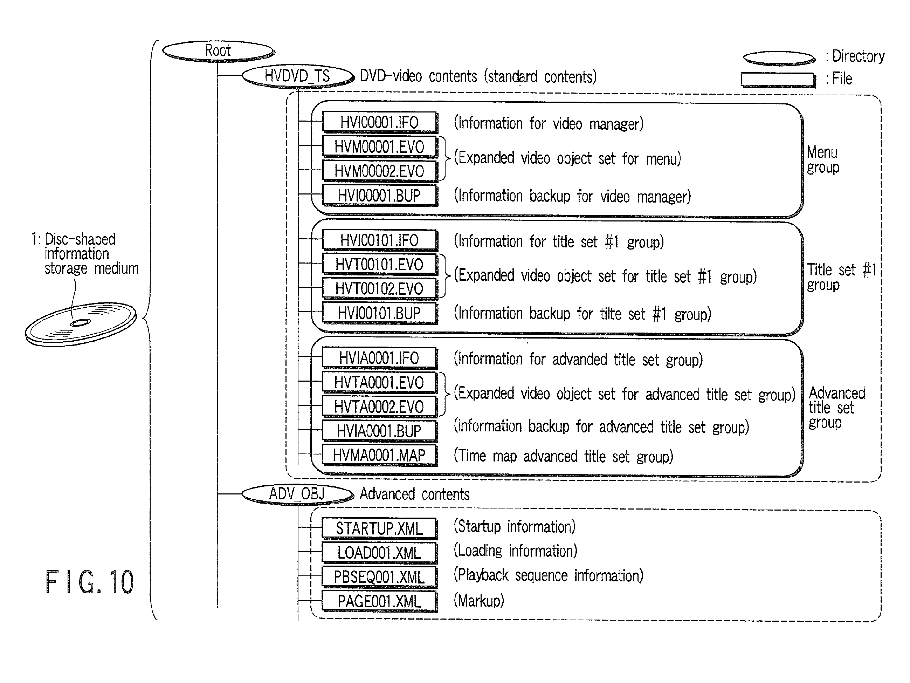

FIG. 10 is a view for explaining an example of a file system which manages contents recorded on the disc-shaped information storage medium according to the embodiment of the invention. The areas (30, 40) shown in FIG. 9 form independent files in the file system having the ISO9660 and UDF bridge structures. Conventional (standard SD) DVD-Video contents are allocated together under a directory named "VIDEO_TS". On the other hand, files according to the embodiment of the invention have a configuration in which an HVDVD_TS directory for storing information files that handle High-Definition video data, and an ADV_OBJ directory for storing information files that handle advanced object data are allocated under a Root directory, as shown in, e.g., FIG. 10.

The HVDVD_TS directory broadly includes a group of files which belong to a menu group used for a menu, and groups of files which belong to title set groups used for titles. As the group of files that belong to the menu group, an information file (HVI00001.IFO) for a video manager having information used to manage the entire disc, its backup file (HVI00001.BUP), and playback data files (HVM00001.EVO to HVM00003.EVO) of expanded video object sets for a menu used as background frames of a menu are stored.

As the group of files that belong to a title set #n group (e.g., title set #1 group), an information file (HVIxxx01.IFO: xxx = 001 to 999) for a video title set having information used to manage title set #n, its backup file (HVIxxx01.BUP: xxx = 001 to 999), playback data files (HVTxxxyy.EVO: xxx = 001 to 999, yy = 01 to 99) of expanded video object sets for title set #n used as a title are stored.

Furthermore, as the group of files that belong to an advanced title set group, an information file (HVIA0001.IFO) for a video title set having information used to manage an advanced title set, its backup file (HVIA0001.BUP), playback data files (HVTAxxyy.EVO: xx = 01 to 99, yy = 01 to 99) of video object sets for advanced title sets used as titles, time map information files (HVMAxxxx.MAP: xxxx = 0001 to 9999) for advanced title sets, their backup files (HVMAxxxx.BUP: xxxx = 0001 to 9999, not shown), and the like are stored.

The ADV_OBJ directory stores a startup information file (STARTUP.XML), loading information file (LOAD001.XML), playback sequence information file (PBSEQ001.XML), markup language file (PAGE001.XML), moving picture data, animation data, still picture data file, audio data file, font data file, and the like. Note that the contents of the startup information file include startup information of data such as moving picture data, animation data, still picture data, audio data, font data, a markup language used to control playback of these data, and the like. The loading information file records loading information (that can be described using a Markup language/Script language/StyleSheet, and the like), which describes information associated with files to be loaded onto a buffer in a playback apparatus, and the like.

The playback sequence information file (PBSEQ001.XML) records playback sequence information (that can be also described using a Markup language or the like), which defines a section to be played back of the playback data files of expansion video object sets for advanced title sets in the advanced title set group, and the like.

Note that the markup language is a language that describes text attributes along commands which are defined in advance, and can give the font type, size, color, and the like to a character string as attributes. In other words, the markup language is a description language which describes structures (headings, hyperlinks, and the like) and modification information (character size, the state of composition, and the like) of sentences in these sentences by partially bounding special character strings called "tags".

Since a document written using the markup language becomes a text file, the user can normally read it using a text editor, and can edit that file, of course. As typical markup languages, SGML (Standard Generalized Markup Language), HTML (HyperText Markup Language) evolved from SGML, TeX, and the like are known.

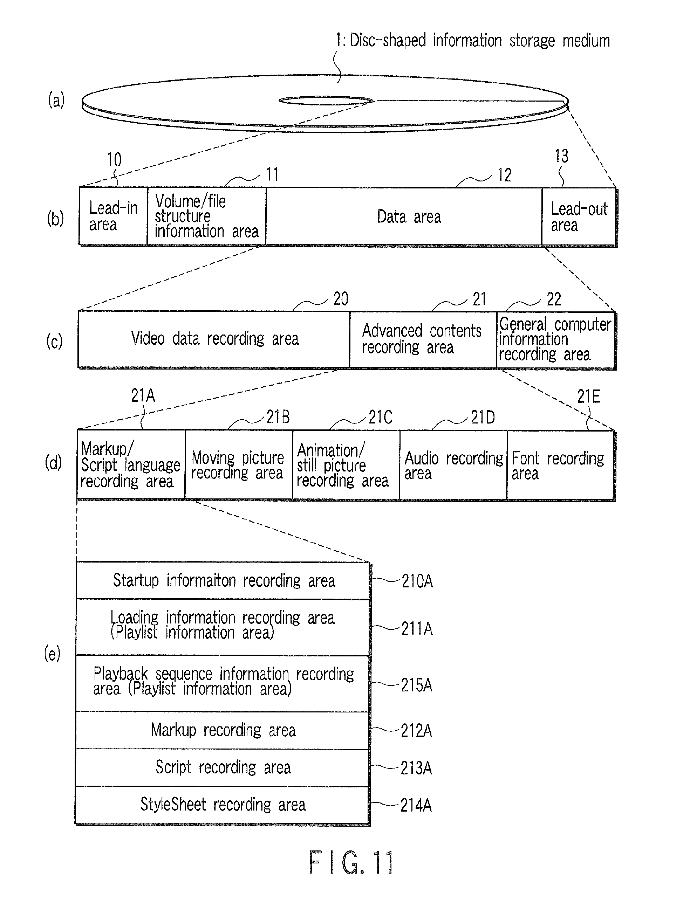

FIG. 11 is a view for explaining an example of the recording contents of an advanced contents recording area of the information contents recorded on disc-shaped information storage medium (optical disc, etc.) 1 according to another embodiment of the invention. As shown in FIG. 11(d), advanced contents recording area 21 in FIG. 11(c) is configured to include moving picture recording area 21B for recording moving picture data, animation/still picture recording area 21C for recording animation data and still picture data, audio recording area 21D for recording audio data, font recording area 21E for recording font data, and Markup/Script language recording area 21A for recording information for controlling playback of these data (such information is described using a Markup language/Script language/StyleSheet, and the like) (area 21A is the head of the recording order of these areas as shown in FIG. 11).

The information for controlling playback (recording contents in area 21A) describes a playback method (display method, playback sequence, playback switching sequence, selection of objects to be played back, etc.) of advanced contents (including audio, still picture, font/text, moving picture, animation, and the like) and/or DVD-Video contents using a Markup language, Script language, and StyleSheet. For example, Markup languages such as HTML (Hyper Text Markup Language)/XHTML (extensible Hyper Text Markup Language), SMIL (Synchronized Multimedia Integration Language), and the like, Script languages such as an ECMA (European Computer Manufacturers Association) script, JavaScript (Java is the registered trade name), and the like, StyleSheets such as CSS (Cascading Style Sheet), and the like, and so forth, may be used in combination.

Markup/Script language recording area 21A includes startup recording area 210A for recording startup information, loading information recording area 211A for recording information of files to be loaded onto a buffer in a playback apparatus, playback sequence information recording area 215A for defining the playback order of video for playing back the HD_DVD video stored in the expansion video object sets of the advanced title sets using a Markup language or Script language, Markup recording area 212A for recording the aforementioned Markup languages, Script recording area 213A for recording the aforementioned Script languages, and StyleSheet recording area 214A for recording the aforementioned StyleSheets.

Note that loading information recording area 211A and playback sequence information recording area 215A shown in FIG. 11(e) can be used as the areas for storing playlist information.

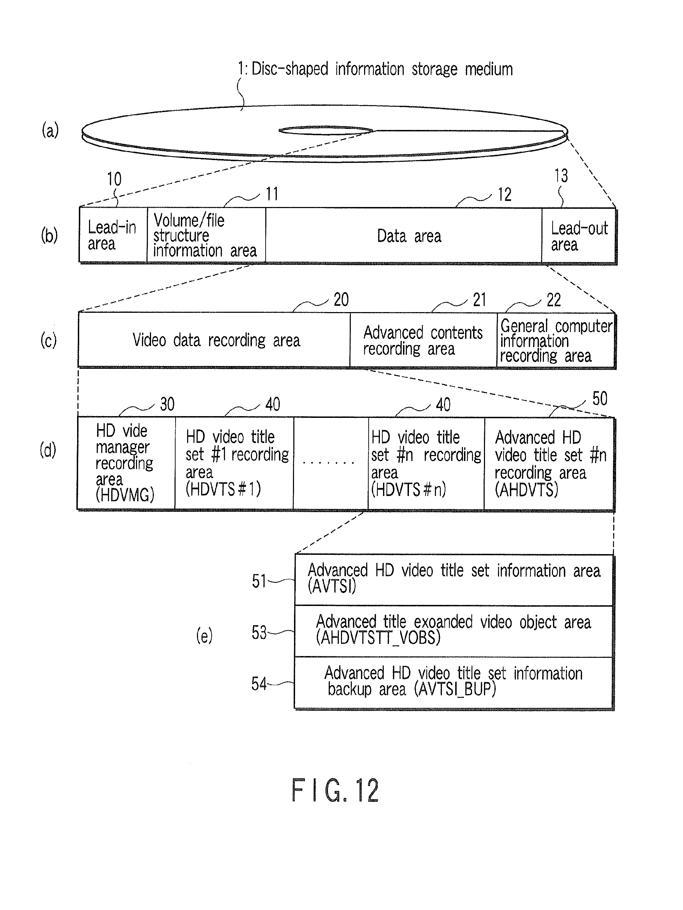

FIG. 12 is a view for explaining an example of the recording contents of an advanced HD video title set recording area of the information contents recorded on disc-shaped information storage medium (optical disc, etc.) 1 according to still another embodiment of the invention. An advanced HD video title set (AHDVTS: advanced VTS) shown in FIG. 12(d) is a video object which is specialized to be referred to from a Markup language as one of the aforementioned advanced contents.

As shown in FIG. 12(e), advanced HD video title set (AHDVTS) recording area 50 includes advanced HD video title set information (AHDVTSI) area 51 that records management information for all the contents in advanced HD video title set recording area 50, advanced HD video title set information backup area (AHDVTSI_BUP) 54 that records the same information as in HD video title set information area 51 as backup data, and advanced title video object area (AHDVTSTT_VOBS) 53 that records video object (title picture information) data in an advanced HD video title set.

The interior of advanced HD video title set information (AHDVTSI) 51 shown in FIG. 12(e), which is recorded together in the HVIA0001.IFO (or VTSA0100.IFO) file shown in FIG. 10, is divided into respective fields (management information groups): an advanced HD video title set information management table (AHDVTSI_MAT), advanced HD video title set PTT search pointer table (AHDVTS_PTT_SRPT), advanced HD video title set program chain information table (AHDVTS_PGCIT), advanced HD video title set menu cell address table (AHDVTS_C_ADT), and time map information table (TMAPIT) (although they are not shown).

Note that the time map information table (TMAPIT) is one field of advanced HD video title set information (AHDVTSI) area 51, but it can be recorded in the same file (HVIA0001.IFO in FIG. 10) as advanced HD video title set information area 51 or in a file (e.g., HVM00000.MAP) independent from advanced HD video title set information area 51.

The advanced HD video title set information management table (AHDVTSI_MAT) records management information common to the corresponding video title set. Since this common management information is allocated in the first field (management information group) in advanced HD video title set information (AHDVTSI) area 51, the common management information in the video title set can be immediately loaded. Hence, the playback control processing of the information playback apparatus can be simplified, and the control processing time can be shortened.

The advanced HD video title set information management table (AHDVTSI_MAT) can store the following information as the common management information in the video title set. That is, the advanced HD video title set information management table is configured to store various kinds of information: an advanced HD video title set identifier (AHDVTS_ID), the end address (AHDVTS_EA) of the advanced HDVTS, the end address (AHDVTSI_EA) of the advanced HDVTSI, the version number (VERN) of the HD_DVD-Video standard, an AHDVTS category type (AHDVTS_CAT), the end address (AHDVTSI_MAT_EA) of the AHDVTSI_MAT, the start address (AHDVTSTT_VOBS_SA) of the AHDVTSTT_VOBS, the start address (AHDVTS_PTT_SRPT_SA) of the AHDVTS_PTT_SRPT, the start address (AHDVTS_PGCIT_SA) of the AHDVTS_PGCIT, the start address (AHDVTS_C_ADT_SA) of the AHDVTS_C_ADT, the number (ATR1_AGL_Ns) of angles of a video object having attribute information 1 (ATR1), a video attribute (ATR1_ V_ATR) of the video object having attribute information 1 (ATR1), the number (ATR1_AST_Ns) of audio streams of the video object having attribute information 1 (ATR1), an audio stream attribute table (ATR1_AST_ATRT) of the video object having attribute information 1 (ATR1), the number (ATR1_SPST_Ns) of sub-picture streams of the video object having attribute information 1 (ATR1), a sub-picture stream attribute table (ATR1_SPST_ATRT) of the video object having attribute information 1 (ATR1), a multi-channel audio stream attribute table (ATR1_MU_ AST_ATRT) of the video object having attribute information 1 (ATR1), and the like (attribute information 2 and attribute information 3 follow).

Of the information that can be stored in the advanced HD video title set information management table (AHDVTSI_MAT), the start address (HDVTSM_VOBS_SA) of an HDVTSM_VOBS included in a standard VTS need not exist since the advanced VTS does not include any HDVTSM_VOBS (or it may be used as a reserved area). The start address (HDVTSM_PGCI_UT_SA) of the HDVTSM_PGCI_UT included in the standard VTS need not exist since the advanced VTS does not include any HDVTSM_VOBS (or it may be used as a reserved area). The start address (HDVTSM C_ADT_SA) of the HDVTSM_C_ADT included in the standard VTS need not exist since the advanced VTS does not include any HDVTSM (or it may be used as a reserved area). The start address (HDVTSM_VOBU_ADMAP_SA) of the HDVTSM_VOBU_ADMAP included in the standard VTS need not exist since the advanced VTS does not include any HDVTSM (or it may be used as a reserved area). Furthermore, the start address (HDVTS_VOBU_ADMAP_SA) of the HDVTS_VOBU_ADMAP included in the standard VTS need not exist since the advanced VTS includes the substitute time map information table (or it may be used as a reserved area).

Note that the information (AHDVTS_CAT) indicating the categories of the advanced VTS stored in the advanced HD video title set information management table (AHDVTSI_MAT) is defined as follows:
AHDVTS_CAT = 0000b: no AHDVTS category is specified
AHDVTS_CAT = 0001b: reserved
AHDVTS_CAT = 0010b: advanced VTS with advanced contents
AHDVTS_CAT = 0011b: advanced VTS without advanced contents
AHDVTS_CAT = other: reserved

The "advanced VTS with advanced contents" whose category is indicated by "AHDVTS_CAT = 0010b" basically represents an advanced VTS which is configured with the Markup language. That is, in this category, the contents producer assumes an "advanced VTS controlled by the Markup language", and playback is permitted only according to the control of the Markup language but playback of the advanced VTS alone is not permitted. For example, when the contents producer describes a Markup language that permits playback of an advanced VTS in a given period only under the specific condition, if playback of the advanced VTS alone is permitted, this period can be undesirably played back under a condition other than the specific condition. Such playback is inhibited for the advanced VTS of the category "AHDVTS_CAT = 0010b".

The "advanced VTS without advanced contents" whose category is indicated by "AHDVTS_CAT = 0011b" basically represents an advanced VTS that allows playback of the advanced VTS alone without any Markup language. This assumes an advanced VTS which maintains playback compatibility between other recording standards (to be referred to as a VR standard) such as DVD-VR/HDDVD-VR and the playback dedicated standard (to be referred to as a video standard) in the embodiment of the invention. The video and VR standards have different standard contents due to their different use applications (the video standard places an emphasis on interactiveness, and the VR standard places an emphasis on edit functions). By commonizing a structurally simplified advanced VTS between the two standards, playback compatibility can be assured between the two standards having different purposes. For example, an information storage medium recorded in an advanced VTS mode in a recorder according to the VR standard can be played back by all playback apparatuses.

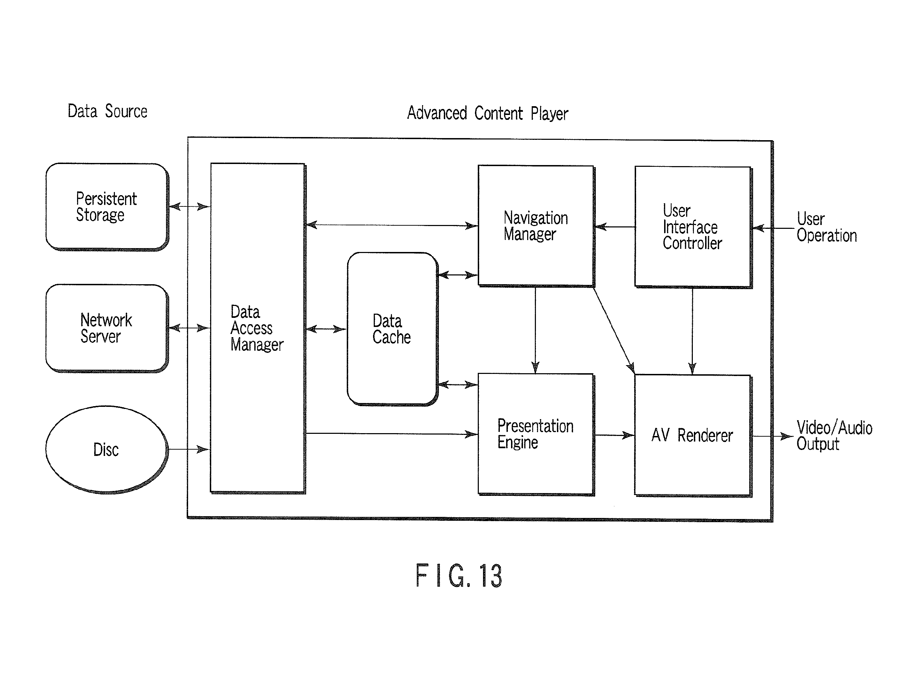

FIG. 13 is a block diagram showing the functional modules as large units for the playback system model of an HD_DVD player according to an embodiment of the invention. "Data Source" represents a data storage location accessible when this HD_DVD player executes playback. "Data Source" includes "Disc", "Persistent Storage", "Network Server", and the like. "Disc" corresponds to disc 1 in FIGS. 9 to 12.

An NAS (Network Attached Storage) or the like present on a home network can also belong to the category of persistent storages. "Network Server" indicates a server present on the Internet. In general, a server managed by a movie picture company which provides a DVD disc can be assumed as the network server.

"Advanced Content Player" represents the whole playback system model of the HD_DVD player. The advanced content player is configured, as a large module, by "Data Access Manager", "Data Cache", "Navigation Manager", "Presentation Engine", "User Interface Controller", "AV Renderer", and the like.

"Data Access Manager" manages data exchange between "Data Source" and the modules in "Advanced Content Player". "Data Cache" is a data storage device which temporarily stores data used by "Navigation Manager" or "Presentation Engine" for playback.

"Navigation Manager" loads and interprets "Advanced Navigation", controls "Presentation Engine", "AV Renderer" and the like, and manages playback control of a content type 2 or 3 disc. "Navigation Manager" loads "Startup File" from a disc and sets the HD_DVD player used for playback control upon insertion of the disc.

"Presentation Engine" loads, from "Data Source" or "Data Cache", "Primary Video Set" data, "Secondary Video Set" data, and "Advanced Element" data using "Data Access Manager" based on control commands and signals generated by "Navigation Manager" in accordance with playback control information of "Advanced Navigation". "Presentation Engine" then plays back the loaded data and sends its output to "AV Renderer".

"AV Renderer" performs α-blending or mixing control of video picture data or audio data output from "Presentation Engine" based on control commands or signals from "Navigation Manager" in accordance with playback control information from "Advanced Navigation". "AV Renderer" finally outputs signals from the HD DVD player to an external TV monitor or loudspeakers.

"User Interface Controller" transmits, as an event to "Navigation Manager", a signal input from a user interface such as a front panel, remote controller, mouse, or the like. "User Interface Controller" also controls the display of a mouse cursor.

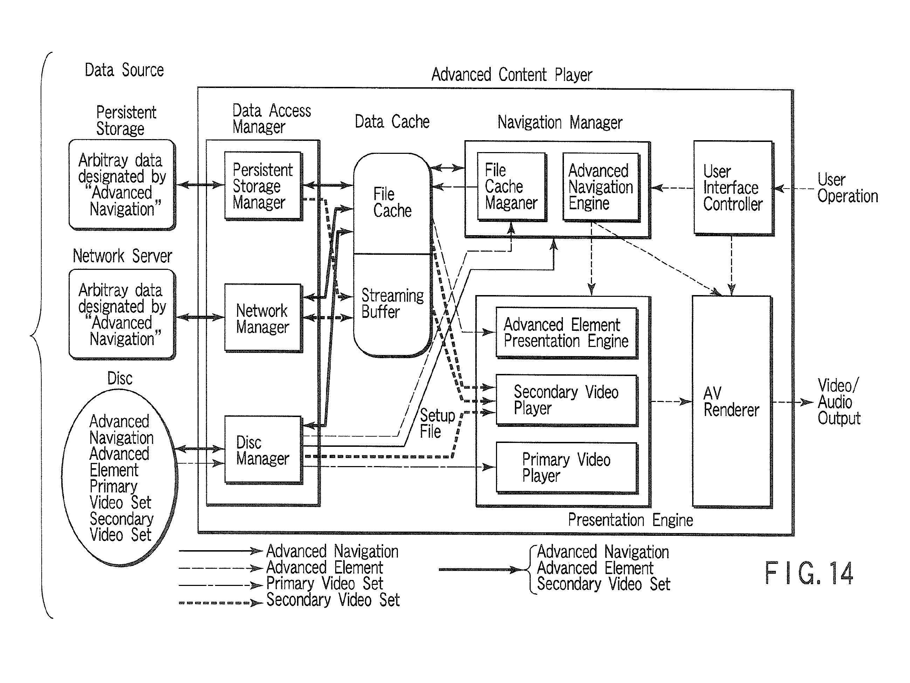

FIG. 14 is a detailed block diagram when FIG. 13 is illustrated from the viewpoint of a data flow. As a result of playback control of "Advanced Navigation", all kinds of data can be stored in "Persistent Storage" or "Network Manager" as far as its capacity allows. The HD_DVD player can read/write-access "Persistent Storage" or "Network Manager". Data loaded by "Advanced Content Player" and used for playback generally can include "Advanced Navigation", "Advanced Element", and "Secondary Video Set". "Primary Video Set" is stored in only "Disc", but not in "Persistent Storage" or "Network Server".

Data stored in "Disc" can include "Advanced Navigation", "Advanced Element", "Primary Video Set", and "Secondary Video Set". "Disc" is a read only medium. No data is written in "Disc" by playback control of "Advanced Navigation".

"Data Access Manager" incorporates "Persistent Storage Manager", "Network Manager", and "Disc Manager" which generally access data from "Persistent Storage", "Network Server", and "Disc", respectively. Data access to "NAS (Network Attached Storage)" included in "Persistent Storage" may be managed by "Persistent Storage Manager" using the "Network Manager" function.

A line directed from "Disc Manager" to "Navigation Manager" indicates the flow of data when "Navigation Manager" loads "Startup File" contained in "Advanced Navigation" after predetermined disc type discrimination processing at the time of insertion of a disc. A line directed from "Disc Manager" to "Primary Video Player" indicates the data flow of "Primary Video Set". A line directed from "Disc Manager" to "Secondary Video Player" indicates the data flow of "Second Video Set" interleaved in a multiplexed data structure on "Disc".

A line directed from "Disc Manager" to "File Cache Manager" indicates the data flow of "Advanced Element" interleaved in the multiplexed data structure on "Disc". A line directed from "Disc Manager" to "File Cache" indicates the data flow of "Advanced Navigation", "Advanced Element", and "Secondary Video Set" which are not included in the multiplexed data structure on "Disc".

A line directed from "Persistent Storage" or "Network Server" to "File Cache" indicates the flow of "Advanced Navigation", "Advanced Element", and "Secondary Video set" and their reverse flow. A line directed from "Persistent Storage" or "Network Server" to "Streaming Buffer" indicates the flow of "Secondary Video Set".

A line directed from "File Cache" to "Navigation Manager" indicates the flow of mainly causing "Navigation Manager" to load "Advanced Navigation". A line directed from "File Cache Manager" to "File Cache" indicates the flow of writing, in "File Cache" for each data file, the "Advanced Element" data sent from "Disc Manager" to "File Cache". A line directed from "File Cache" to "Advanced Element Presentation Engine" indicates the flow of "Advanced Element". A line directed from "File Cache" to "Secondary Video Player" indicates that the data flow when the TMAP or S-EVOB of "Secondary Video Set" once stored as file data in "File Cache" is played back.

A line directed from "Streaming Buffer" to "Secondary Video Player" indicates the data flow wherein a large "Secondary Video Set" stored in "Persistent Storage" or "Network Server" is loaded in "Streaming Buffer" little by little and is then supplied to "Secondary Video Player". This operation is done due to the following reason. When data is supplied from "Data Source" whose data loading speed is not constant such as a general network, the data loading speed fluctuation is absorbed to minimize discontinuation of "Secondary Video Set" playback.

A dotted line directed from "Advanced Navigation Engine" to "Presentation Engine" or "AV Renderer" indicates a control signal. A line directed to "Presentation Engine" often indicates that text subtitle data stored in the "Advanced Navigation" data configured by Markup/Script data is supplied.

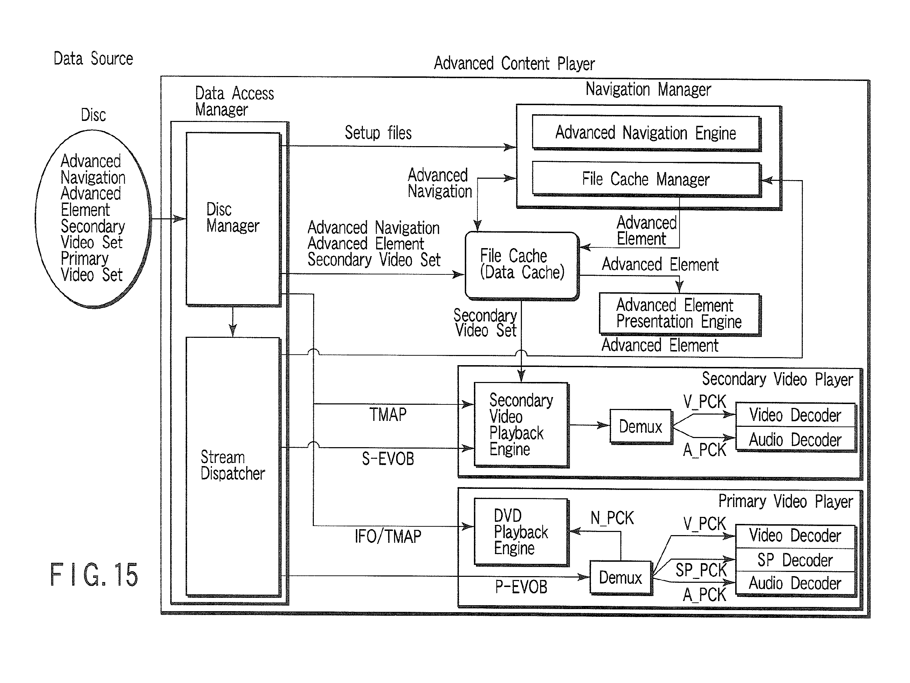

FIG. 15 is a more detailed block diagram when FIG. 14 is illustrated from the viewpoint of a data supply from "Disc". In FIG. 14, only "Disc Manager" in "Data Access Manager" handles the data from "Disc". However, in FIG. 15, "Stream Dispatcher" can also handle the data from "Disc".

"Stream Dispatcher" has functions of receiving the multiplexed data structure from "Disc Manager", and respectively supplying P-EVOBS data, S-EVOB data, and "Advanced Element" data interleaved in a multiplexed data structure to a Demux device in "Primary Video Player", "Secondary Video Playback Engine" in "Secondary Video Player", and "File Cache Manager" in "Navigation Manager".

Upon inserting "Disc" to the player according to the embodiment of the invention, "Disc Manager" supplies "Startup File" recorded on "Disc" to "Navigation Manager". The "Advanced Navigation" file, "Advanced Element" file, and "Secondary Video Set" file which are managed in a file system on "Disc" are loaded in "File Cache" based on a result obtained when "Advanced Navigation Engine" in "Navigation Manager" interprets "Startup File" and "Advanced Navigation".

When "Primary Video Player" is to play back "Primary Video Set", the IFO data and TMAP data of "Primary Video Set" are loaded from "Disc Manager" onto "DVD Playback Engine", prior to playback of "Primary Video Set". "Primary Video Player" provides an upper control API (Application Interface) to "Navigation Manager" for playing back "Primary Video Set". The upper control API is an API such as "Play", "FF", "STOP", or "PAUSE". The detailed playback control processing of "Primary Video Set" is controlled by "DVD Playback Engine".

"DVD Playback Engine" performs playback control of "Primary Video Set" in accordance with the upper control API from "Advanced Navigation Engine" according to the description of "Advanced Navigation".

"Demux" demultiplexes P-EVOB data to supply a control pack (N_PCK) to "DVD Playback Engine" and supply a video pack (V_PCK), sub-picture pack (SP_PCK), and audio pack (A_PCK) to "Video Decoder", "SP Decoder", and "Audio Decoder", respectively. These decoders decode the acquired PCK data in appropriate units.

When "Secondary Video Player" is to play back "Secondary Video Set" in which the S-EVOB is interleaved in the multiplexed data structure on "Disc", the TMAP data of "Secondary Video Set" is loaded from "Disc Manager" onto "Secondary Video Playback Engine", prior to playback of "Secondary Video Set". "Secondary Video Set" managed on the file system can also be stored in "File Cache" temporarily, and then loaded and played back by "Secondary Video Playback Engine".

"Secondary Video Player" provides an upper control API for playing back "Secondary Video Set" as well as "Primary Video Player".

"Secondary Video Playback Engine" performs playback control of "Secondary Video Set" in accordance with the upper control API from "Advanced Navigation Engine" according to the description of "Advanced Navigation".

"Demux" in "Secondary Video Player" demultiplexes the S-EVOB data to supply a video pack (V_PCK) and audio pack (A_PCK) to "Video Decoder" and "Audio Decoder", respectively.

In the model of this embodiment, "Second Video Set" includes only the video pack and audio pack. However, "Secondary Video Set" may have a structure which also includes a sub-picture pack and control pack.

"File Cache Manager" acquires an "Advanced Element" data pack output from "Stream Dispatcher". After the pack data is supplied until it can be handled as one file data, the pack data is written in "File Cache" as one file which belongs to "Advanced Element".

For example, when large file data such as font data is to be written in "File Cache", the file data may be started to be written in "File Cache" before all the font file data in "File Cache Manager" are collected, and the file data may be successively written in "File Cache" to form a final font file in "File Cache".

"Advanced Element" stored in the multiplexed data structure can also be compressed and then interleaved. In this case, "File Cache Manager" loads the compressed "Advanced Element" data by a decompressable size to perform decompression processing. "File Cache Manager" then writes the "Advanced Element" file generated as a result of the decompression processing in "File Cache". The "Advanced Element" data may be compressed for each file. Alternatively, an archive including the plurality of "Advanced Element" files may be compressed.

"Advanced Element Presentation Engine" loads the "Advanced Element" data from "File Cache", and executes decoding processing and the like of "Advanced Element" based on control commands/signals from "Advanced Navigation Engine" in accordance with the description of "Advanced Navigation".

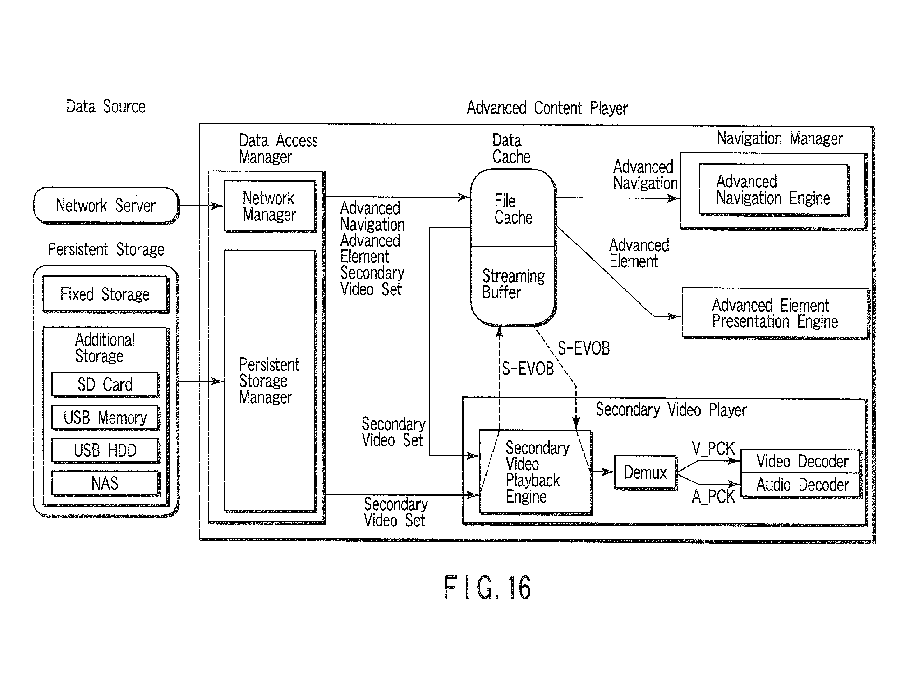

FIG. 16 is a more detailed block diagram when FIG. 14 is illustrated from the viewpoint of a data supply from "Network Server" and "Persistent Storage". A device serving as "Persistent Storage" can be divided into "Fixed Storage" and "Additional Storage". "Fixed Storage" is a recording medium permanently connected to the HD_DVD player, and generally corresponds to a FLASH memory.

"Additional Storage" is a recording medium which is detachable from the HD_DVD player. "Additional Storage" can include a memory card represented by an SD card, a memory device and HDD device which are connected via a connection interface such as a USB, an NAS (Network Attached Storage) connected on the network, and the like.

As in the supply model from "Disc" shown in FIG. 15, "File Cache" is supplied with data such as "Advanced Navigation", "Advanced Element", and "Secondary Video Set" via "Network Manager" and "Persistent Storage Manager".

When "Secondary Video Set" having the S-EVOB data whose capacity is larger than that of "File Cache" is to be played back, the data is directly supplied to "Secondary Video Playback Engine" sequentially, to play back "Secondary Video Set". At this time, in accordance with control described in "Advanced Navigation", "Secondary Video Playback Engine" can play back "Secondary Video Set" while temporarily storing it in "Streaming Buffer". This operation is done due to the following reason. When data supply speed is not constant such as a network, discontinuation of "Secondary Video Set" playback is minimized. Generally, "Streaming Buffer" need not be used in order to play back "Secondary Video Set" loaded in "File Cache".

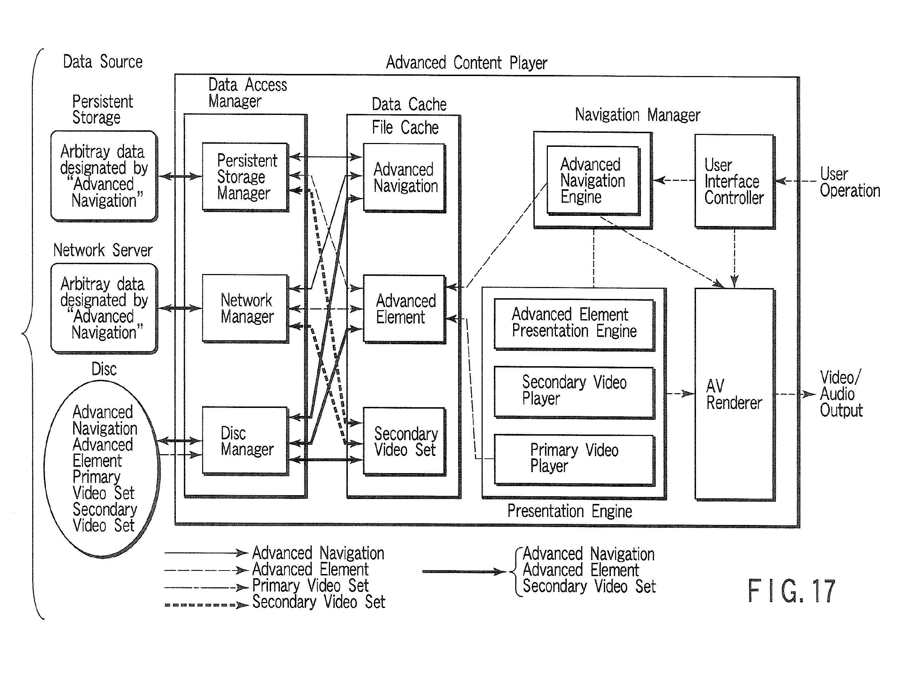

FIG. 17 is a detailed block diagram when FIG. 14 is illustrated from the viewpoint of the data storage flow to "Persistent Storage" and "Network Server". A line directed from "Advanced Navigation Engine" to "Advanced Element" indicates the flow of causing "Advanced Navigation Engine" to write, in "File Cache", "Advanced Element" such as the data file generated using the Script language or the like. "Advanced Navigation Engine" generates a file for recording the number of times of viewing the video on "Disc" by using the description in, e.g., the Script language and stores the generated file in "Persistent Storage". Whenever the user has finished viewing the video picture data on "Disc", "Advanced Navigation Engine" updates the data in the file. "Advanced Navigation Engine" may display the number of times of viewing the video on a screen, or it may send the score data of a game created using the Script language to "Network Server" to compete in the game to earn a high score. Such data generated by "Advanced Navigation Engine" is temporarily stored in "File Cache", and then copied or moved to appropriate storage destinations.

A line directed from "Primary Video Player" to "Advanced Element" indicates the flow of pausing the video picture data whose playback is underway in "Primary Video Set" in accordance with the description of "Advanced Navigation Engine" or interpretation of a user operation, and writing, in "File Cache", "Advanced Element" such as an image file obtained by capturing a frame or the like. The generated captured frames may be collected to make an original chapter collection with appropriate comments. The data may be stored in "Persistent Storage" and the like to view the video picture data by selecting a scene based on the original chapter frames from the next time. Frame capturing sources may include the "Secondary Video Set" frame output from "Secondary Video Player", a graphic frame output from "Advanced Element Presentation Engine", or an output picture from "AV Renderer" obtained by mixing these frames.

The data generated by "Navigation Manager", "Presentation Engine", and the like are temporarily stored in "File Cache", and then stored on an appropriate Data Source medium in accordance with the description of "Advanced Navigation". Similarly, when the contents in "Persistent Storage", "Network Server", and "Disc" are to be stored in or uploaded to "Persistent Storage" or "Network Server", the data is temporarily loaded in "File Cache", and then stored on an appropriate Data Source medium, in accordance with the description of "Advanced Navigation".

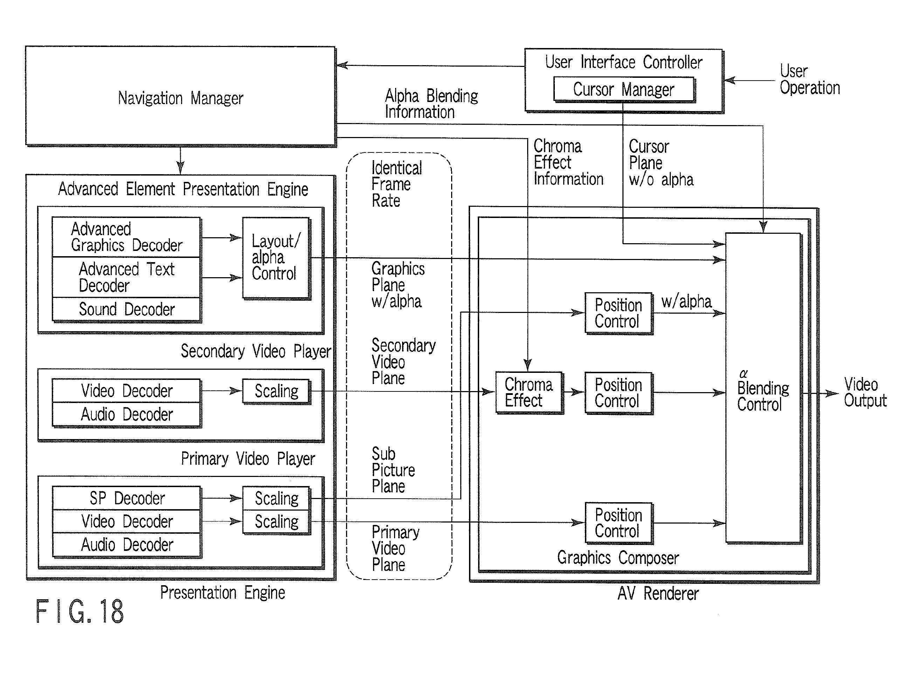

FIG. 18 is a detailed block diagram of a blending model of picture outputs. FIG. 18 assumes outputs of five picture planes. The five picture planes include "Primary Video Plane", "Secondary Video Plane", "Sub-Picture Plane", "Graphics Plane", and "Cursor Plane" when they are described in turn from planes of lower layers.

"Primary Video Plane" is a video output plane of "Primary Video Set". In this model, "Primary Video Plane" is supplied to "AV Renderer" via a "Scaling" device. This model does not assume that any α value (a value that determines transparency indicating the degree an underlying layer can be seen through) is applied to "Primary Video Plane". However, when, for example, a background plane or the like is prepared as an underlying layer of "Primary Video Plane", application of the α value to "Primary Video Plane" is effective to enhance the powers of expression.

"Secondary Video Plane" is a video output plane of "Secondary Video Set". In this model, "Secondary Video Plane" is supplied to "AV Renderer" via a "Scaling" device. This model incorporates a "Chroma Effect" function to implement a function of extracting the shape of an object in a video and superimposing it on the output of "Primary Video". This function can be implemented by painting a portion other than the object to be extracted in a specific color, and handling the portion in that color as a transparent portion.

"Sub-Picture Plane" is a Sub-Picture output plane of "Primary Video Set". In this model, "Sub-Picture Plane" is supplied to "AV Renderer" via a "Scaling" device. For example, when Sub-Picture data of the SD size is prepared in advance, or when Sub-Picture data for Pan Scan output or that for Letter Box output of the SD size is prepared in advance, the "Scaling" device outputs Sub-Picture data suited to the output size from "SP Decoder" without any processing, thus blending it to the entire picture.

"Graphics Plane" is a picture output plane of "Advanced Element Presentation Engine". This model assumes that "Advanced Graphic Decoder" processes picture data such as picture data of JPEG, PNG, and the like, and those such as cell animation, vector animation, and the like, and "Advanced Text Decoder" processes to output a text picture using font data. These decoding result outputs for respective objects are sent to "Layout/Alpha Control", and undergo layout control and α-blending control in accordance with control information of "Navigation Manager" obtained by interpreting "Advanced Navigation". Layout processing includes scaling of objects and the like.

"Cursor Plane" is managed and output by "Cursor Manager" in "User Interface Controller". In this model, an α value is set for a Cursor object, and is blended to other planes.

The above five picture data are output from respective decoders in formats corresponding to the output frame rate of final video data of the HD_DVD player. When these outputs are supplied to "AV Renderer", all plane data are supplied in the same frame rate/format.

"Graphic Composer" is a module which manages blending of the aforementioned five picture outputs, and includes "α Blending Control", "Position Control", "Chroma Effect", and the like.

As described above, "Chroma Effect" is a function module which processes a color designated by "Navigation Manager" as a transparent color so as to extract the shape of a predetermined object from the video output of "Secondary Video Player". In practice, since the "Secondary Video" output often suffers a change in color value of a pixel as a "Chroma Key" due to the use of Lossy codec such as MPEG2 or the like, it is effective to incorporate a function of extracting the shape of an object more precisely by designating the "Chroma Key" to have a certain range in place of using one color or by applying image processing.

"Position Control" supplies a picture obtained by controlling the layout position of input video data with respect to the entire picture output size to "α Blending Control".

"α Blending Control" blends the aforementioned video data in accordance with an instruction of "Advanced Navigation" interpreted by "Navigation Manager", and generates a final video output picture.

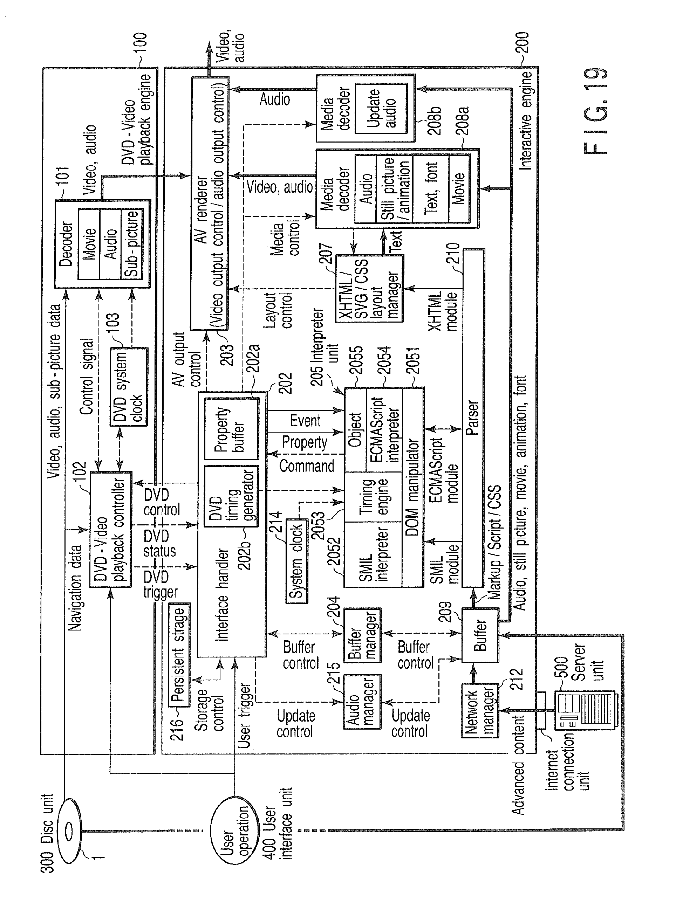

FIG. 19 is a block diagram for explaining an example of the internal structure of a playback apparatus (advanced VTS compatible DVD-Video player) according to another embodiment of the invention. This DVD-Video player plays back and processes the recording content from information storage medium 1 shown in FIGS. 9, 11, 12, and the like, and downloads and processes advanced content from a communication line (e.g., the Internet or the like).

The DVD-Video player shown in FIG. 19 comprises DVD-Video playback engine (DVD_ENG) 100, interactive engine (INT_ENG) 200, disc unit (disc drive) 300, user interface unit 400, and the like. DVD-Video playback engine 100 plays back and processes an MPEG2 program stream (DVD-Video content) recorded on information storage medium 1. Interactive engine (INT_ENG) 200 plays back and processes advanced content. Disc unit 300 reads out the DVD-Video content and/or advanced content recorded on information storage medium 1. User interface unit 400 supplies an input by the user of the player (user operation) to the DVD-Video player as a user trigger.

Basically, when a standard VTS is to be played back (standard VTS playback state), the user input is supplied to the DVD-Video playback engine; when an advanced VTS is to be played back (advanced VTS playback state), the user input is supplied to the interactive engine. Even when the advanced VTS is to be played back, a predetermined user input can be directly supplied to the DVD-Video playback engine.

Interactive engine (INT_ENG) 200 comprises an Internet connection unit. This Internet connection unit serves as communication means that connects server unit 500 or the like via a communication line (Internet or the like). Furthermore, interactive engine (INT_ENG) 200 is configured to include buffer unit 209, parser 210, XHTML/SVG/CSS layout manager 207, ECMAscript interpreter/DOM manipulator/SMIL interpreter/timing engine/object (interpreter unit) 205, interface handler 202, media decoders 208a/208b, AV renderer 203, buffer manager 204, audio manager 215, network manager 212, system block 214, persistent storage 216, and the like.

In the block arrangement of FIG. 19, DVD-Video playback controller 102, DVD-Video decoder 101, DVD system block 103, interface handler 202, parser 210, interpreter unit 205, XHTML/SVG/CSS layout manager 207, AV renderer 203, media decoders 208a/208b, buffer manager 204, audio manager 215, network manager 212, system clock 214, and the like can be implemented by a microcomputer (and/or hardware logic) which serves as the functions of respective blocks by an installed program (firmware; not shown). A work area used upon executing this firmware can be assured using a semiconductor memory (and a hard disc as needed; not shown) in the block arrangement.

DVD-Video playback engine (DVD_ENG) 100 is a device for playing back DVD-Video content recorded on information storage medium 1 shown in FIG. 9 and the like, and is configured to include DVD-Video decoder 101 for decoding the DVD-Video content loaded from disc unit 300, DVD-Video playback controller 102 for making playback control of the DVD-Video content, DVD system clock 103 for determining the decode and output timings in the DVD-Video decoder, and the like.

DVD-Video decoder 101 has a function of decoding main picture data, audio data, and sub-picture data read out from information storage medium 1 shown in FIG. 9 and the like, and outputting the decoded video data (obtained by mixing the main picture data and sub-picture data, etc.) and audio data. That is, the player shown in FIG. 19 can play back video data, audio data, and the like with the MPEG2 program stream structure in the same manner as a normal DVD-Video player.

In addition, DVD-Video playback controller 102 can control playback of the DVD-Video content in accordance with a "DVD control signal" output from interactive engine (INT_ENG) 200. More specifically, when a given event (e.g., menu call or title jump) has occurred in DVD-Video playback engine 100 upon DVD-Video playback, DVD-Video playback controller 102 can output a "DVD trigger" signal indicating the playback condition of the DVD-Video content to interactive engine (INT_ENG) 200. In this case (simultaneously with output of the DVD trigger signal or at an appropriate timing before and after the output), DVD-Video playback controller 102 can output a "DVD status" signal indicating property information (e.g., an audio language, sub-picture subtitle language, playback operation, playback position, various kinds of time information, disc content, and the like set in the player) of the DVD-Video player to interactive engine (INT_ENG) 200.

Interface handler 202 receives a "user trigger" corresponding to a user operation (menu call, title jump, play start, play stop, play pause, or the like) from user interface unit 400. Interface handler 202 transmits the received user trigger to interpreter unit 205 as a corresponding "event". For example, the markup language describes the following instructions for this "event".
1. issue a "command" corresponding to a user operation. That is, the same command as the user operation is transmitted to the DVD-Video layback engine as a DVD control signal.
2. issue a "command" different from a user operation. That is, the user action is substituted by another operation in accordance with an instruction of the markup language.
3. ignore user trigger. That is, a user event is inhibited since, for example, the user may designate a DVD-Video playback process which is not designed by the content provider.

Note that the content of the user trigger signal transmitted to interface handler 202 may be transmitted to AV renderer 203 as an "AV output control" signal. As a result, for example, when the user has changed the content or window size or has shifted its display position using a cursor key of a remote controller (not shown), a user trigger signal based on this operation is output to AV renderer 203 as a corresponding AV output control signal. In addition, when a user trigger signal which indicates switching between a video/audio output from DVD-Video playback engine 100 and that from interactive engine 200 is sent to AV renderer 203, the video/audio output can be switched in response to the user operation.

Interface handler 202 exchanges a "DVD status" signal, "DVD trigger" signal, and/or "DVD control" signal with DVD-Video playback controller 102, or exchanges a "user trigger" signal with user interface unit 400. Furthermore, interface handler 202 exchanges "event", "property", "command", and "control" signals with interpreter unit 205.

That is, interface handler 202 can do the following.
1. Interface handler 202 transmits a "DVD trigger" signal which indicates the operation of DVD-Video playback engine 100 from DVD-Video playback engine 100, or a "user trigger" which indicates the user operation from user interface unit 400 to interpreter unit 205 as an "event".
2. Interface handler 202 transmits a "DVD status" signal which indicates the playback status of DVD-Video playback engine 100 from DVD-Video playback engine 100 to interpreter unit 205 as a "property". At this time, DVD status information is saved in property buffer 202a of interface handler 202 as needed.
3. Interface handler 202 outputs a "DVD control" signal to control playback of DVD-Video playback engine 100 to DVD-Video playback engine 100, an "AV output control" signal to switch video and audio data to AV renderer 203, a "buffer control" signal to load/erase the content of buffer 209 to buffer manager 204, an "update control" signal to download update audio data to audio manager 215, and a "media control" signal to instruct decoding of various media to media decoders 208a/208b, in accordance with the content of a "command" signal from Interpreter unit 205.
4. Interface handler 202 measures information of DVD system clock 103 in DVD-Video playback engine 100 using its DVD timing generator 202b, and transmits the measurement result to media decoders 208a/208b as a "DVD timing" signal. That is, media decoders 208a/208b can decode various media in synchronism with system clock 103 of DVD-Video playback engine 100.

As described above, interface handler 202 has a function of parsing and interpreting advanced content, and then exchanging control signals and the like between DVD-Video playback engine 100 and interactive engine 200.

Interface handler 202 is configured to exchange a first signal and also a second signal on the basis of the content which are parsed by parser 210 and are interpreted by interpreter unit 205, or a user trigger from an input device (e.g., a remote controller). In other words, interface handler 202 controls the output states of video and audio signals by AV renderer 203 on the basis of at least one of the first signal exchanged with DVD-Video playback controller 102, and the second signal exchanged with interpreter unit 205.

Note that the first signal pertains to the playback status of information storage medium 1, and corresponds to the "DVD control" signal, "DVD trigger" signal, "DVD status" signal, and the like. The second signal pertains to the content of the advanced content, and corresponds to the "event" signal, "command" signal, "property" signal, "control" signal, and the like.

Interface handler 202 is configured to execute processes corresponding to user triggers in accordance with the markup language. AV renderer 203 is configured to mix video/audio data generated by media decoders 208a/208b with that played back by DVD-Video playback engine 100 on the basis of the execution results of the processes corresponding to user triggers, and to output mixed data. Alternatively, AV renderer 203 is configured to select one of video/audio data generated by media decoders 208a/208b and that played back by DVD-Video playback engine 100 on the basis of the execution result of the "command" in interface handler 202, and to output the selected video/audio data.

Generally speaking, parser 210 parses the markup language indicating playback control information, which is included in advanced content acquired from information storage medium 1 or advanced content downloaded from the Internet or the like. The markup language is configured by a combination of markup languages such as HTML/XHTML, SMIL, and the like, script languages such as ECMAscript, Javascript, and the like, and stylesheets such as CSS and the like, as described above. Parser 210 has a function of transmitting an ECMAscript module to an ECMAscript interpreter, a SMIL module to a SMIL interpreter of interpreter unit 205, and an XHTML module to XHTML/SVG/CSS layout manager 207 in accordance with the parsing result.

The ECMAscript interpreter interprets the aforementioned ECMAscript module and follows its instructions. That is, the ECMAscript interpreter has a function of issuing a "command" signal used to control respective functions in interactive engine 200 to interface handler 202 in correspondence with an "event" signal sent from interface handler 202 or a "property" signal read from property buffer 202a of interface handler 202. At this time, the ECMAscript interpreter issues a "command" signal to DVD-Video playback engine 100 or a "media control" signal to media decoders 208a/208b at the timings designated by the markup language in accordance with the time measured by system clock 214. In this manner, the control operation of DVD-Video playback engine 100 and various media control operations (decode control of audio, still picture/animation, text/font, and movies, etc.) can be achieved.

The SMIL timing engine interprets the aforementioned SMIL module and follows its instructions. That is, the SMIL timing engine has a function of issuing a "control" signal to interface handler 202 or media decoders 208a/208b in correspondence with an "event" signal sent from interface handler 202 or a "property" signal read from property buffer 202a of interface handler 202 in accordance with system clock 214. With this function, control of the DVD-Video playback engine 100 and decoding of various media (audio, still picture/animation, text/font, movie) can be achieved at given timings. That is, the SMIL timing engine can operate based on system clock 214 in accordance with the description of the markup language, or can operate on the basis of DVD system clock 103 from DVD timing generator 202b.

XHTML/SVG/CSS layout manager 207 interprets the aforementioned XHTML module and follows its instructions. That is, XHTML/SVG/CSS layout manager 207 outputs a "layout control" signal to AV renderer 203. The "layout control" signal includes information associated with the size and position of a video screen to be output (this information often includes information associated with a display time such as display start, end, or continuation), and information associated with the level of audio data to be output (this information often includes information associated with an output time such as output start, end, or continuation). Also, text information to be displayed, which is included in the XHTML module, is sent to media decoders 208a/208b, and is decoded and displayed using given font data.

Practical methods of parsing and interpreting markup and script languages can adopt the same methods as parsing/interpretation in state-of-the-art techniques such as HTML/XHTML, SMIL, and the like or ECMAscript, Javascript, and the like (a microcomputer may be used as the hardware). Note that commands and variables described in scripts are different since objects to be controlled are different. The markup language used upon practicing the invention uses unique commands and variables associated with playback of the DVD-Video content and/or advanced content. For example, a command that switches the playback content of the DVD-Video content or advanced content in response to a given event is unique to the markup or script language used in the embodiment of the invention.

As another example of commands and variables unique to the markup or script language, those which are used to change the video size from DVD-Video playback engine 100 and/or interactive engine 200 and to change the layout of that video data are available. A change in video size is designated using a size change command and a variable that designates the size after change. A change in video layout is designated by a display position change command and a variable that designates the coordinate position or the like after change. When objects to be displayed overlap on the screen, variables that designate z-ordering and transparency upon overlaying are added.

As still another example of commands and variables unique to the markup or script language, those which are used to change the audio level from DVD-Video playback engine 100 and/or interactive engine 200 or to select an audio language to be used are available. A change in audio level is designated by an audio level change command and a variable that designates an audio level after change. An audio language to be used is selected by an audio language change command and a variable that designates the type of language after change. As yet another example, those which are used to control user triggers from user interface unit 400 are available.

On the basis of the commands/variables of the markup and script languages, as exemplified above, a "layout control" signal is sent from XHTML/SVG/CSS layout manager 207 (some functions are often implemented by the SMIL timing engine 206) to AV renderer 203. The "layout control" signal controls the layout on the screen, size, output timing, and output time of video data to be displayed on, e.g., an external monitor device or the like (not shown), and/or the tone/loudness, output timing, and output time of audio data to be played back from an external loudspeaker (not shown).

Media decoders 208a/208b decode data of the advanced content such as audio data, still picture (including a background picture)/animation, text/font data, movie data, and the like included in the advanced content. That is, each of media decoders 208a/208b includes an audio decoder, still picture/animation decoder, text/font decoder, and movie decoder in correspondence with objects to be decoded. For example, audio data in the advanced content, which is encoded by, e.g., MPEG, AC-3, or DTS is decoded by the audio decoder and is converted into non-compressed audio data. Still picture data or background picture data, which is encoded by JPEG, GIF, or PNG, is decoded by the still picture decoder, and is converted into non-compressed picture data. Likewise, movie or animation data, which is encoded by MPEG2, MPEG4, Macromedia Flash, or Scalable Vector Graphics (SVG), is decoded by the movie or animation decoder, and is converted into non-compressed movie/animation data.

Text data included in the advanced content is decoded by the text/font decoder using font data (e.g., OpenType format) included in the advanced content, and is converted into text picture data which can be superimposed on a movie or still picture. Video/audio data, which includes these decoded audio data, picture data, animation/movie data, and text picture data as needed, is sent from media decoders 208a/208b to AV renderer 203. This advanced content is decoded in accordance with an instruction of a "media control" signal from interface handler 202 and in synchronism with a "DVD timing" signal from interface handler 202 and a "timing" signal from system clock 214.

AV renderer 203 has a function of controlling a video/audio output. More specifically, AV renderer 203 controls, e.g., the video display position and size (often including the display timing and display time together), and the audio level (often including the output timing and output time together) in accordance with the "layout control" signal output from XHTML/SVG/CSS layout manager 207. Also, AV renderer 203 executes pixel conversion of video data in accordance with the type of designated monitor and/or the type of video data to be displayed. The video/audio outputs to be controlled are those from DVD-Video playback engine 100 and media decoders 208a/208b. Furthermore, AV renderer 203 has a function of controlling mixing and switching of the DVD-Video content and advanced content in accordance with an "AV output control" signal output from interface handler 202.

Note that interactive engine 200 in the DVD-Video player in FIG. 19 comprises an interface for sending the markup language in the advanced content read from information storage medium 1 to parser 210 via buffer unit 209, and an interface for sending data (audio data, still picture/animation data, text/font data, movie data, and the like) in the read advanced content to media decoders 208a/208b via buffer unit 209. These interfaces form an interface (first interface) independent from the Internet connection unit in FIG. 19.

Also, the DVD-Video player in FIG. 19 comprises an interface for receiving advanced content from a communication line such as the Internet or the like, and sending the markup language in the received advanced content to parser 210 via buffer unit 209, and an interface for sending data (audio data, still picture/animation data, text/font data, movie data, and the like) in the received advanced content to media decoders 208a/208b via buffer unit 209. These interfaces form the Internet connection unit (second interface) shown in FIG. 19.

Buffer unit 209 includes a buffer that stores the advanced content downloaded from server unit 500, and also stores the advanced content read from information storage medium 1 via disc unit 300. Buffer unit 209 reads the advanced content stored in server unit 500, and downloads them via the Internet connection unit under the control of buffer manager 204 based on the markup language/script language.

Also, buffer unit 209 loads the advanced content recorded on information storage medium 1 under the control of buffer manager 204 based on the markup language/script language. At this time, if disc unit 300 is a device that can access the disc at high speed, disc unit 300 can read out the advanced content from information storage medium 1 while playing back the DVD-Video content, i.e., reading out DVD-Video data from information storage medium 1.

If disc unit 300 is not a device that can make high-speed access, or if the playback operation of the DVD-Video content is to be perfectly guaranteed, playback of the DVD-Video content should not be interrupted. In such case, the advanced content is read out from information storage medium 1 and are stored in the buffer in advance prior to the beginning of playback. In this way, since the advanced content is read out from the buffer simultaneously when the DVD-Video content are read out from information storage medium 1, the load on disc unit 300 can be reduced. Hence, the DVD-Video content and advanced content can be simultaneously played back without interrupting playback of the DVD-Video content.

In this manner, since the advanced content downloaded from server unit 500 is stored in buffer unit 209 in the same manner as those recorded on information storage medium 1, the DVD-Video content and advanced content can be simultaneously read out and played back.

Buffer unit 209 has a limited storage capacity. That is, the data size of the advanced content that can be stored in buffer unit 209 is limited. For this reason, it is possible to erase the advanced content with low necessity and to save those with high necessity under the control of buffer manager 204 (buffer control). Buffer unit 209 can automatically execute such save and erase control.

Furthermore, buffer unit 209 has a function (preload end trigger, load end trigger) of loading content requested by buffer manager 204 from disc unit 300 or server unit 500 into buffer unit 209, and informing buffer manager 204 that the advanced content designated by buffer manager 204 have been loaded into the buffer.

Buffer manager 204 can send the following instructions as "buffer control" to buffer unit 209 in accordance with an instruction of the markup language (even during playback of DVD video content):
load all or part of a specific file from a server;
load all or part of a specific file from a disc; and
erase all or part of a specific file from a buffer.

Furthermore, buffer manager 204 instructs buffer unit 209 to load the advanced content in accordance with loading information, which is described in the markup language (or in a file designated by the markup language). Buffer manager 204 has a function (buffer control) of requesting to inform that specific advanced content described in loading information have been loaded into buffer unit 209.

Upon completion of loading of the specific advanced content into buffer unit 209, buffer unit 209 informs buffer manager 204 of it, and the buffer manager informs interface handler 202 of it (preload end trigger, load end trigger).

Audio manager 215 has a function of issuing an instruction for loading update audio data (audio commentary data) from information storage medium 1 in disc unit 300 or server unit 500 into buffer unit 209 in accordance with an instruction of the markup language (update control).

Network manager 212 controls the operation of the Internet connection unit. That is, network manager 212 switches connection/disconnection of the Internet connection unit when the markup language designates connection or disconnection to or from the network as a "command". Also, network manager 212 has a function of checking the connection state to the network, and allows the markup language to download the advanced content in accordance with the connection state to the network.

Persistent storage 216 is an area for recording information (information set by the user and the like) associated with information storage medium 1, and comprises a nonvolatile storage medium such as a hard disc, flash memory, or the like. That is, even after the power supply of the DVD player is turned off, this information is held.

As information associated with the information storage medium to be played back, information such as the playback position of the DVD-Video content or advanced content, user information used in user authentication implemented by the advanced content, a game score of a game implemented by the advanced content, and the like are recorded in accordance with an instruction of the markup language (storage control). As a result, when the information storage medium is played back next time, playback can be continued from the previous position. When the advanced content downloaded from the server into the buffer are recorded in this persistent storage 216 upon playing back the information storage medium, the information storage medium can be played back without connecting the network from the next time.

The components of Interactive engine 200 in FIG. 19 may be summarized as follows. That is, interactive engine 200 comprises:
* Parser 210
   Parser 210 parses the content of the markup language.
* Interpreter unit 205, XHTML/SVG/CSS layout manager 207
   Interpreter unit 205 which comprises the ECMAscript interpreter, SMIL timing engine, and the like, and XHTML/SVG/CSS layout manager 207 respectively interpret the parsed modules.
* Interface handler 202
   Interface handler 202 handles control signals from interpreter unit 205, and those from DVD-Video playback controller 102.
* Media decoders 208a/208b
   Media decoders 208a/208b generate video/audio data corresponding to audio data, still picture data, animation data, text/font data, movie data, and the like included in the advanced content in synchronism with system clock 103 of DVD playback engine 100 or system clock 214 of Interactive engine 200.
* AV renderer 203
   AV renderer 203 outputs data obtained by mixing video/audio data generated by media decoders 208a/208b to that played back by DVD-Video playback engine 100 on the basis of the execution result of the "command" in interface handler 202. Or AV renderer 203 selectively outputs one of video/audio data generated by media decoders 208a/208b and that played back by DVD-Video playback engine 100 on the basis of the execution result of the "command" in interface handler 202.
* Buffer unit 209
   Buffer unit 209 temporarily stores the advanced content acquired from disc unit 300 or from server unit 500 via the Internet connection unit.
* Buffer manager 204
   Buffer manager 204 loads or erases advanced content data to or from buffer unit 209 in accordance with an instruction from interface handler 202 (an instruction of the markup language), or the description of loading information.
* Network manager
   The network manager controls connection or disconnection to or from the network and checks the connection state in accordance with an instruction of the markup language.
* Persistent storage 216
   The persistent storage holds information associated with the information storage medium such as the playback position of the content, user information, and the like, and also the advanced content downloaded from server unit 500.

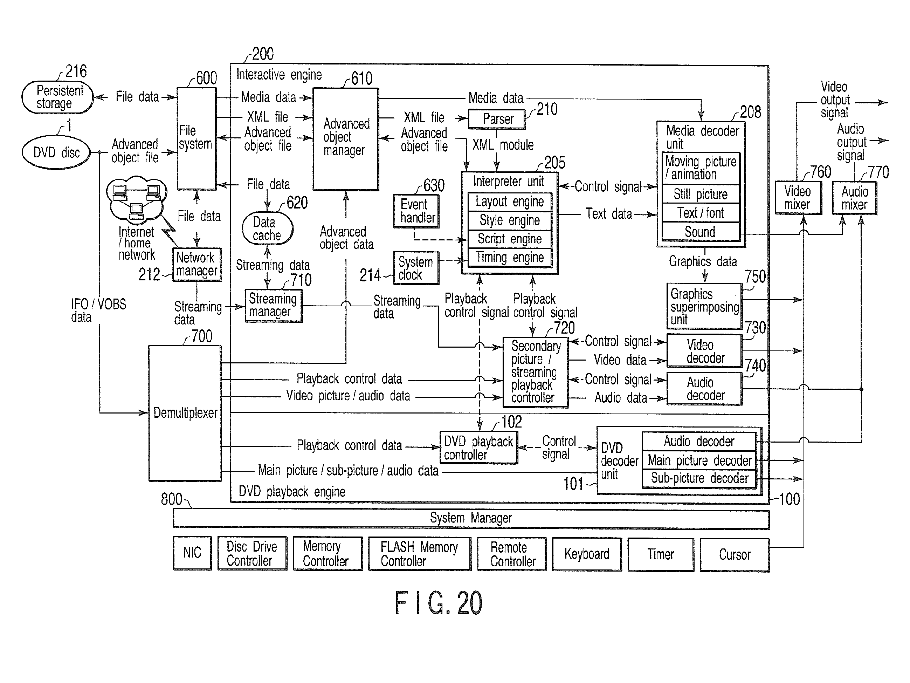

FIG. 20 is a system block diagram for explaining an example of the internal structure of a playback apparatus (advanced VTS compatible DVD-Video player) according to another embodiment of the invention. This DVD-Video player plays back and processes the recording content (DVD-Video content and/or advanced content) from information storage medium 1 shown in FIG. 9, etc, and the like, and downloads and processes advanced content from a communication line (e.g., the Internet/home network or the like).

In the system arrangement of the embodiment shown in FIG. 20, interactive engine 200 comprises parser 210, advanced object manager 610, data cache 620, streaming manger 710, event handler 630, system clock 214, interpreter unit 205 including a layout engine, style engine, script engine, and timing engine, media decoder unit 208 including moving picture/animation, still picture, text/font, and sound decoders, graphics superposing unit 750, secondary picture/streaming playback controller 720, video decoder 730, audio decoder 740, and the like.

On the other hand, DVD playback engine 100 comprises DVD playback controller 102, DVD decoder unit 101 including an audio decoder, main picture decoder, sub-picture decoder, and the like, and so forth.

The DVD-Video player comprises, as functional modules to be provided to interactive engine 200 and DVD playback engine 100, persistent storage 216, DVD disc 1, file system 600, network manager 212, demultiplexer 700, video mixer 760, audio mixer 770, and the like. Also, as modules which are the functions of the DVD-Video player and are mainly used by interactive engine 200 to perform information acquisition and operation control via system manager 800, the player comprises an NIC, disc drive controller, memory controller, FLASH memory controller, remote controller, keyboard, timer, cursor, and the like.

The recording locations and formats of advanced content other than DVD-Video data to be handled by interactive engine 200 may be as follows (note that a disc described as a DVD disc includes not only a normal DVD-Video disc but also a next-generation HD_DVD disc or the like).
1. file format data on the DVD disc;
2. multiplexed divided data in an EVOB on the DVD disc;
3. file format data in the persistent storage of the DVD-Video player;
4. file format data or streaming data on a network server on the Internet/home network.

"File format data on the DVD disc" of "1." is stored in the advanced content recording area. Interactive engine 200 loads an advanced content file on the DVD disc via the file system.

"Multiplexed divided data in an EVOB on the DVD disc" of "2." has a data format which is multiplexed and recorded in a VTS_EVOBS recorded in the advanced HD video title set recording area (AHDVTS). As the multiplexed data, data redundant to "file format data on the DVD disc" of "1." are recorded. Such data is loaded to demultiplexer 700 in correspondence with loading of the VTS_EVOBS, and if the demultiplexed data are divided data of advanced content, they are sent to advanced object manager 610.

Advanced object manager 610 temporarily stores the divided data of the advanced content received from demultiplexer 700, and stores them as file format data of the advanced content in data cache 620 at the reception timing of data that can form one file.

As multiplexed advanced content data in an EVOB on the DVD disc, file data obtained by compressing one or a plurality of advanced content files in accordance with a predetermined method may be divisionally stored, so as to improve the efficiency of data upon multiplexing. In this case, advanced object manager 610 temporarily stores divided data until the compressed data can be decompressed, and stores decompressed advanced content data in data cache 620 at a timing at which the advanced content data can be handled as a file format.

"File format data in persistent storage 216 of the DVD-Video player" of "3." corresponds to, e.g., introduction movie data of a new film or the like which is downloaded from the Internet and is stored at a predetermined position on persistent storage 216 while interactive engine 200 is playing back a DVD title including advanced content created by a given movie company.

For example, when a DVD title including other advanced content created by that movie company is played back, the following use method may be adopted. That is, "interactive engine 200 searches the predetermined position on persistent storage 216 in accordance with the description of the markup/script language of advanced content. If interactive engine 200 finds the saved introduction movie data of the new film there, it jumps to an XML page used to refer to/play back that data. If the playback process is selected by a user operation, interactive engine 200 plays back the introduction movie data of the new film stored in persistent storage 216".

An example of file format data of "file format data or streaming data on a network server on the Internet/home network" of "4." corresponds to the aforementioned introduction movie data of the new film or the like. As an example of streaming data, the following use method may be adopted. That is, "when DVD-Video data of a movie on a DVD disc includes only Japanese and English audio data, a movie company creates Chinese audio data, and a DVD-Video player connected to the Internet plays back the Chinese audio data in synchronism with video picture data on the DVD disc while sequentially downloading it".

In the system block diagram of FIG. 20, file system 600, parser 210, interpreter unit 205, media decoder unit 208, data cache 620, network manager 212, streaming manager 710, graphics superposing unit 750, secondary picture/streaming playback controller 720, video decoder 730, audio decoder 740, demultiplexer 700, DVD playback controller 102, DVD decoder unit 101, and the like can be implemented by a microcomputer and/or hardware logic which implement/implements respective module functions by parsing built-in programs (firmware; not shown).

A work area (including a temporary buffer used in a decoding process) used upon executing this firmware can be assured using a semiconductor memory (not shown) (and a hard disc device as needed) of each module. Furthermore, the system includes communication means for control signals (not shown) between respective modules so as to attain data supply and a synchronization process, and operation control between used modules can be managed. The communication means include signal lines of the hardware logic, event/data notification processes between software programs, and the like.

The behaviors for respective functions of the DVD-Video player will be described below using the system block diagram of FIG. 20. The DVD-Video player that plays back advanced content implements richly expressive menus and more interactive playback control, which are difficult to attain in the conventional DVD, using an XML file and style sheet described using the markup/script language or the like. An example in which a menu page including a button selection that outputs an animation effect or effect sound upon selection of the user is to be configured will be examined.

The configuration and functions of the menu page are defined by a menu XML page described using the markup/script language. The menu XML page is stored in a DVD disc, and interpreter unit 205 passes the content of the menu XML page parsed by parser 210 to the layout engine, style engine, script engine, timing engine, and the like in accordance with their description content.

The timing engine receives time events from system clock 214 at predetermined intervals, and instructs processing instructions to the layout engine, style engine, and script engine on the basis of the description of the menu XML page arranged in the timing engine. These engines refer to configuration information of the menu XML page managed by them, and issue decode process instructions to media decoder unit 208 as needed.

Media decoder unit 208 loads media data from the advanced object save area such as data cache 620 or the like as needed in accordance with instructions from interpreter unit 205, and executes decode processes.

Of data decoded by media decoder unit 208, moving picture/animation, still picture, and text/font output results associated with graphics display are sent to graphics superposing unit 750, which generates frame data of a graphics plane to be output in accordance with the descriptions of the layout and style sheet of interpreter unit 205, and outputs it to video mixer 760.

Video mixer 760 mixes the output frame of graphics superposing unit 750, an output frame of the video decoder which is output in accordance with an instruction from secondary picture/streaming playback controller 720, output frames of the main picture decoder and sub-picture decoders in DVD decoder unit 101 which are output in accordance with an instruction from DVD playback controller 102, an output frame of the cursor function of the DVD-Video player, and the like in accordance with a predetermined superposing rule while synchronizing these output frames. Video mixer 760 converts the mixed output frame data into a television output signal, and outputs it onto a video output signal line.

The behavior of the secondary picture/streaming playback controller 720 which is output in synchronism with the output frame of the graphics frame will be described below. As a main storage destination of secondary picture data, a DVD disc and streaming server on the Internet or home network are assumed.

Upon playback of secondary picture data stored on the DVD disc, IFO/VOBS (including an EVOBS) data is loaded from the DVD disc to demultiplexer 700. Demultiplexer 700 identifies various types of multiplexed data, and demultiplexes and sends data associated with main picture playback control to DVD playback controller 102, data associated with main picture, sub-picture, and audio of the DVD-Video to DVD decoder unit 101, and data associated with secondary picture playback control to secondary picture/streaming playback controller 720. If advanced object data are multiplexed and stored in this data, these data are sent to advanced object manager 610.

Secondary picture/streaming playback controller 720 executes playback control of secondary picture data on the DVD disc on the basis of a playback control signal from interpreter unit 205. For example, when interpreter unit 205 instructs not to execute playback of stored secondary picture data, all data are discarded here. When a playback instruction is issued, secondary picture/streaming playback controller 720 outputs data shaped to a format and data size suited to decode processes to video decoder 730 and audio decoder 740. Video decoder 730 and audio decoder 740 execute decode processes while synchronizing their output timings with the output from DVD decoder unit 101, in accordance with an instruction from secondary picture/streaming playback controller 720.

Control signals instructed by secondary picture/streaming playback controller 720 include instructions of the video position, the degree of scaling, that of a transparency process, a chroma color process, and the like to video decoder 730, and a volume control instruction, channel mixing instruction, and the like to audio decoder 740.

When the user designates fast forwarding, jump, or the like via a remote controller or the like, event handler 630 acquires an event from the remote controller, and notifies the script engine of interpreter unit 205 of that event. The script engine runs in accordance with the markup/script description of an XML file used to execute playback control, and confirms the presence/absence of an event handler of the remote controller process. If the XML file used to execute the playback control defines an explicit behavior, the script engine executes a process according to the description; if nothing is defined, it executes a predetermined process.

When fastforwarding is to be executed as a result of the user's remote controller process, interpreter unit 205 instructs DVD playback controller 102 and secondary picture/streaming playback controller 720 to execute fast forwarding. DVD playback controller 102 re-configures a read schedule of VOBS data to change a data read process from the DVD disc in accordance with the fastforwarding instruction from interpreter unit 205. In this way, control is made to supply used data to fastforwarding playback of DVD playback controller 102 and DVD decoder unit 101 without causing any underflow. Since data to be supplied to secondary picture/streaming playback controller 720 are stored in correspondence with the main picture data allocation, secondary picture data suited to fastforwarding playback are supplied from demultiplexer 700 in synchronism with the data read process used for fastforwarding executed by DVD playback controller 102.

Upon playing back stream data based on the secondary picture/streaming playback control, secondary picture/streaming playback controller 720 instructs streaming manager 710 to read streaming data on a predetermined network server and to supply the read data to itself on the basis of a playback control signal from interpreter unit 205.

Streaming manager 710 requests network manager 212 to execute a protocol control process of actual streaming data reception, and acquires data from the network server. At this time, for example, when the bit rate of the streaming data is high, look-ahead cashing of streaming data is made using a streaming buffer area on data cache 620 which is set in advance based on startup information, thus making control for broadening, e.g., an allowance of reception bit rate variations of streaming data.

In this case, streaming manager 710 temporarily stores streaming data from the network server in the streaming buffer on data cache 620, and supplies data stored in the streaming buffer on data cache 620 in response to a streaming data read request from secondary picture/streaming playback controller 720. When no streaming buffer is assured on data cache 620, streaming manager 710 sequentially outputs streaming data acquired from the network server to secondary picture/streaming playback controller 720.

When secondary picture/streaming playback controller 720 performs playback control of streaming data on the network, it need not always perform playback in synchronism with video picture playback of DVD playback engine 100. For this reason, secondary picture/streaming playback controller 720 need not play back any streaming data even when DVD playback engine 100 does not perform any video picture playback, or it need not synchronize the playback state of streaming data with that (e.g., a special playback state such as a fastforwarding state or pause state) of DVD playback engine 100.

Upon executing the playback process of streaming data read from a streaming server on the network, data supply underflow is likely to occur. In this case, a priority process can be designated in the description of the markup/script language of advanced content to flexibly define behaviors as follows. For example, the playback process of DVD playback engine 100 is preferentially executed, and DVD-Video playback is continued even when streaming data is interrupted. Alternatively, for example, playback of streaming data is preferentially executed, and DVD-Video playback is interrupted when streaming data is interrupted. Data to be played back by secondary picture/streaming playback controller 720 may be video data alone or audio data alone.

An example of the functions of respective modules which form the system block diagram of FIG. 20 will be explained below.

### Persistent storage 216:

It stores generated file data, file data downloaded from the Internet/home network, and the like in accordance with an instruction from interpreter unit 205. Data stored in persistent storage 216 are held even when the ON/OFF event of the power switch of the DVD-Video player occurs. Interpreter unit 205 can erase data in persistent storage 216.

### DVD disc 1:

It stores advanced content and DVD-Video data. Sector data on the DVD disc are read in accordance with read requests from the file system and demultiplexer.

### File system 600:

It manages the file system for respective recording modules/devices, and provides a file access function to file data read/write requests from the advanced object manager and the like. As an example of the file system for respective recording modules/devices, when persistent storage 216 comprises a FLASH memory, a file system for the FLASH memory is used to control to average memory rewrite accesses. DVD disc 1 is accessed using a UDF or ISO9660 file system. As for files on the network, network manager 212 executes actual protocol control such as HTTP, TCP/IP, and the like, and the file system itself relays the file access function to network manager 212. The file system manages data cache 620 as, e.g., a RAM disc.

### Network manager 212:

It provides a read (write as needed) function of file data provided on an HTTP server on the network to the file system. It also executes actual protocol control in accordance with a sequential read request of stream data from streaming manager 710, acquires the requested data from the streaming server on the network, and passes the acquired data to streaming manager 710.

### Demultiplexer 700:

It reads data on the DVD disc in accordance with a read instruction of sector data that store IFO/VOBS data from DVD playback controller 102 (and the secondary picture/streaming playback controller when secondary picture data alone is played back). As for multiplexed data of the read data, demultiplexer 700 supplies demultiplexed data to appropriate processing units. Demultiplexer 700 supplies IFO data to the DVD playback controller and secondary picture/streaming playback controller 720. Demultiplexer 700 outputs main picture/sub-picture/audio data associated with DVD-Video stored in a VOBS to DVD decoder unit 101, and control information (NV_PCK) to DVD playback controller 102. Demultiplexer 700 outputs control information and picture/audio data associated with secondary picture data to secondary picture/streaming playback controller 720. When advanced objects are multiplexed in a VOBS, these data are output to advanced object manager 610.

### Parser 210:

It parses the markup language described in an XML file and outputs the parsed result to interpreter unit 205.

### Advanced object manager 610:

It manages an advanced object file to be handled by interactive engine 200. Upon reception of an access request to an advanced object file from parser 210, interpreter unit 205, media decoder unit 208, and the like, advanced object manager 610 confirms the storage state of file data on data cache 620 managed by manager 610. If the requested file data is stored in data cache 620, advanced object manager 610 reads data from data cache 620, and outputs the file data to a module that issued the read request. If the requested data is not stored in data cache 620, advanced object manager 610 reads file data from the DVD disc, a network server on the Internet/home network, or the like, which stores corresponding data, onto data cache 620, and simultaneously outputs the file data to a module that issued the read request. As for data stored in persistent storage 216, advanced object manager 610 does not normally execute any cache process to data cache 620.

As another principal function of advanced object manager 610, when multiplexed advanced object data is stored in VOBS data loaded by demultiplexer 700, advanced object manager 610 temporarily stores these data output from demultiplexer 700, and stores them in data cache 620 at a timing at which they can be stored as file data. When an advanced object file is stored in VOBS data in a format that compresses one or a plurality of files together, advanced object manager 610 temporarily stores divided data to a size that allows decompression, and then decompresses and stores data in data cache 620 as file data.

Advanced object manager 610 stores advanced object data in data cache 620, and timely deletes a file, which becomes unnecessary in playback of the advanced content of interactive engine 200, from data cache 620, in accordance with an instruction from interpreter unit 205 or a predetermined rule. With this delete process, the data cache area having a limited size can be effectively used in accordance with the progress of playback of the advanced content.

### Interpreter unit 205:

This is a module for controlling the behavior of entire interactive engine 200. It initializes data cache 620 and DVD playback controller 102 in accordance with startup information, loading information, or playback sequence information parsed by parser 210. In the playback process of the advanced content, interpreter unit 205 passes layout information, style information, script information, and timing information parsed by parser 210 to respective processing modules, sends control signals to media decoder unit 208, secondary picture/streaming playback controller 720, DVD playback controller 102, and the like in accordance with their descriptions, and executes playback control among modules.

### Layout engine:

The layout engine (one of internal components of interpreter unit 205) handles information associated with objects used in graphics output of the advanced content. It manages definitions, attribute information, and layout information on the screen of moving picture/animation, still picture, text/font, sound objects, and the like, and also manages association information with style information about modifications upon rendering.

### Style engine:

The style engine (one of internal components of interpreter unit 205) manages information associated with detailed modifications upon rendering of rendering objects managed by the layout engine.

### script engine:

The script engine (one of internal components of interpreter unit 205) manages descriptions associated with handler processes that pertain to button depression events from a user interface device (U/I device) such as a remote controller or the like and event messages from the system manager. Event handler 630 defines processing content upon occurrence of a corresponding event, and the script engine changes parameters of graphics rendering objects, and control of DVD playback controller 102, secondary picture/streaming playback controller 720, and the like in accordance with its description.

### Timing engine:

The timing engine (one of internal components of interpreter unit 205) controls scheduled processes associated with the behavior of graphics rendering objects and playback of secondary picture/streaming data. The timing engine refers to system clock 214, and when system clock 214 matches the timing of the scheduled control process, the timing engine controls respective modules to execute the playback process of the advanced content.

### Media decoder unit 208:

It executes the decode process of advanced objects in accordance with a control signal from interpreter unit 205. Media to be handled by media decoder unit 208 include cell animation that successively plays back still images of PNG/JPEG or the like as moving picture data, vector animation that successively renders vector graphics, and the like. Media decoder unit 208 can handle JPEG, PNG, GIF, and the like as still picture data. Upon rendering text data, media decoder unit 208 mainly refers to font data such as vector font (open font) and the like and executes rendering of text data designated by interpreter unit 205.

As sound data, those which have relatively short playback times such as PCM, MP3, and the like are assumed. Such sound data is mainly used a sound effect involved in an event such as button clicking or the like. Of the decode results of media decoder unit 208, the outputs associated with graphics are output to graphics superposing unit 750. Also, sound outputs are output to audio mixer 770.

### Graphics superposing unit 750:

It superposes the outputs of graphics rendering objects output from media decoder unit 208 in accordance with the descriptions of the layout engine and style engine, and generates output image frame data. Most of rendering objects have transparency process information, and graphics superposing unit 750 also executes a transparency calculation process of these objects. The generated output image frame data is output to video mixer 760.

### Data cache 620:

It is mainly used in two use applications. In one use application, data cache 620 is used as a file cache of an advanced object file, and temporarily stores an advanced object file on the DVD disc or network. In the other use application, data cache 620 is used as a buffer of streaming data, and is managed by streaming manager 710. The allocations and sizes of the data cache used as the file cache and streaming buffer may be described in startup information or the like and may be managed for respective advanced content, or the data cache may be used to have predetermined allocations.

### Streaming manager 710:

It manages supply of streaming data between secondary picture/streaming playback controller 720 and network manager 212. When the bit rate of streaming data is relatively small and the streaming buffer need not be used, streaming manager 710 controls network manager 212 to sequentially supply streaming data acquired from a streaming server to secondary picture/streaming playback controller 720.

When the bit rate of streaming data is relatively large, streaming manager 710 can control supply of streaming data using the streaming buffer which is explicitly assured by the producer or provider of advanced content. Streaming manager 710 stores data to be supplied to secondary picture/streaming playback controller 720 in the streaming buffer assured on data cache 620 in accordance with instructions of the streaming buffer size and read-ahead size interpreted by interpreter unit 205. When the data of the instructed read-ahead size is stored in the stream buffer, streaming manager 710 begins to supply streaming data to secondary picture/streaming playback controller 720. At the same time, as soon as a free space of a given size is assured on the streaming buffer, streaming manager 710 issues a data acquisition request to the streaming server, thus efficiently managing the streaming buffer.

### Secondary picture/streaming playback controller 720:

It executes playback control of streaming data supplied from streaming manager 710 and secondary picture data supplied from demultiplexer 700 in accordance with a playback control signal from interpreter unit 205.

### Video decoder 730:

It plays back video picture data supplied from secondary picture/streaming playback controller 720 in accordance with a control signal from secondary picture/streaming playback controller 720. When video picture data is secondary picture data supplied from demultiplexer 700 or when it is instructed to synchronize streaming data with DVD video picture playback, video decoder 730 decodes data to synchronize the output timing of DVD decoder unit 101 with its output timing, and outputs decoded data to video mixer 760.

Video decoder 730 has a chroma color process function for video picture data as its characteristic function. It manages a chroma color area designated by a specific one color or a plurality of colors as a transparent area to form output frame data of video mixer 760.

### Audio decoder 740:

It plays back audio data supplied from secondary picture/streaming playback controller 720 in accordance with a control signal from secondary picture/streaming playback controller 720. When audio data is that of secondary picture data supplied from demultiplexer 700 or when it is instructed to synchronize streaming data with DVD video picture playback, audio decoder 740 decodes data to synchronize the output timing of DVD decoder unit 101 with its output timing, and outputs decoded data to audio mixer 770.

### DVD playback controller 102:

It acquires playback control data of DVD-Video from demultiplexer 700 on the basis of a playback control signal from interpreter unit 205, and executes playback control of main picture/sub-picture/audio data of DVD decoder unit 101.

### DVD decoder unit 101:

It comprises an audio decoder, main picture decoder, sub-picture decoder, and the like, and manages decode processes and output processes while synchronizing respective decoder outputs in accordance with a control signal from DVD playback controller 102.

### Audio decoder:

The audio decoder in DVD decoder unit 101 decodes audio data supplied from demultiplexer 700 and outputs the decoded data to audio mixer 770 in accordance with a control signal from DVD playback controller 102.

### Main picture decoder:

The main picture decoder in DVD decoder unit 101 decodes main picture data supplied from demultiplexer 700 and outputs the decoded data to video mixer 760 in accordance with a control signal from DVD playback controller 102.

### Sub-picture decoder:

The sub-picture decoder in DVD decoder unit 101 decodes sub-picture data supplied from demultiplexer 700 and outputs the decoded data to video mixer 760 in accordance with a control signal from DVD playback controller 102.

### Video mixer 760:

It receives output frames from graphics superposing unit 750, video decoder 730, the main picture decoder and sub-picture decoder in DVD decoder unit 101, and the cursor module, generates an output frame in accordance with a predetermined superposing rule, and outputs a video output signal. In general, each frame data has transparency information as the whole frame data or at an object or pixel level, and video mixer 760 superposes output frames from respective modules using such transparency information.

### Audio mixer 770:

It receives audio data from media decoder unit 208, audio decoder 740, and the audio decoder in DVD decoder unit 101, and generates and outputs an output audio signal in accordance with a predetermined mixing rule.

### System manager 800:

It can provide an interface for status and control of respective modules in the DVD-Video player. Interpreter unit 205 acquires the status of DVD-Video player or can change the behavior via an application interface (API) or the like provided by the system manager.

### Network connection controller (NIC):

This is a module that implements a network connection function, and corresponds to an Ethernet controller (Ethernet is the registered trade name) or the like. The NIC provides information such as connection status of a network cable and the like via the system manager.

### Disc drive controller:

It corresponds to a reading device of a DVD disc, and provides status information such as the presence/absence of a DVD disc on a disc tray, disc type, and the like.

### Memory controller:

It manages the system memory: it provides an area to be used as data cache 620, and executes access management of a work memory used by respective software (firmware) modules.

### FLASH memory controller:

It provides an area used as persistent storage 216, and executes access management to the FLASH memory that stores execution codes and the like of respective software (firmware) modules.

### Remote controller:

It executes remote control of the DVD-Video player, and generates a button depression event of the user to event handler 630.

### Keyboard:

It executes keyboard control of the DVD-Video player, and generates a keyboard depression event of the user to event handler 630.

### Timer:

It supplies system clocks, and provides a timer function used by the DVD playback tine.

### Cursor:

It generates a pointer image of the remote controller or the like, and changes the position of the pointer image upon depression of direction keys and the like.

Interpreter unit 205 in FIG. 20 outputs a playback control signal to DVD playback controller 102. In this playback control signal, a new command is added to the conventional DVD playback control command, thus allowing more flexible playback control. That is, in order to define playback sequence information of an advanced VTS using the aforementioned playback sequence information (which corresponds to the PBSEQ001.XML file in FIG. 10, and is information stored in playback sequence information recording area 215A in FIG. 11, playback sequence information externally fetched via the Internet or the like, or playback sequence information which is generated by the system firmware when the user freely re-arranges chapter icons and is stored in persistent storage 216), a command for initializing with the playback sequence information has to be issued from interactive engine 200 to DVD playback engine 100.

An "InitPBSEQ() command" is a command which is newly defined for the aforementioned purpose, and allows interpreter unit 205 to notify DVD playback controller 102 of the playback sequence information of an advanced VTS to be played back and to initialize it. As an argument of the "InitPBSEQ command", sequence information of the PGC number, PTT numbers, and the like as a basis of the playback sequence is given. If the advanced VTS includes a plurality of PGCs, the PGC number specifies a PGC to be selected. The PTT numbers can define the order of chapters to be played back with reference to the PGC_PGMAP number in the PGC designated by the PGC number. Since only one advanced VTS is stored on the DVD disc, and includes only one title, they need not be designated.

Note that the playback order can be described using cell units, as described above. In this case, the argument of the "InitPBSEQ command" is sequence information of the PGC number and cell numbers. The cell numbers can define the order of cells to be played back with reference to the C_PBIT number in the PGC designated by the PGC number. If the advanced VTS includes only one PGC, the argument of the PGC number in an "InitPBSEQ function" need not be used.

### <Outline of Embodiments>

An information storage medium (high-definition video disc or the like) according to an embodiment of the invention may have a data area (12) storing a video data recording area (20) that includes a management area (30) which records management information and an object area (40, 50) which records objects to be managed by this management information, and an advanced contents recording area (21) which includes information (21A to 21E) different from the recording contents (30 to 50) of the video data recording area (20), and a file information area (11) that stores file information corresponding to the recording contents of the data area (12). In this information storage medium, the object area (40, 50) may be configured to store expanded video objects (objects in an HDVTS; and abbreviated as EVOBS or VOBS as needed) whose playback can be managed using a logical unit called a program chain, and advanced objects (objects in an AHDVTS) recorded independently of the expanded video objects.

Each advanced object may be configured to store playback sequence information (playback control information implemented by a Markup language or the like) that describes the playback order of expanded video objects, playback control information that gives the playback conditions (playback timings, picture output positions, display sizes) of other advanced objects, and the like.

The provider, producer, etc. of contents recorded on the information storage medium can describe the aforementioned playback conditions (or playback control information, playback sequence information, or the like) using a predetermined language (markup language or the like). When the provider or producer supplies the markup language that gives the playback conditions to the playback apparatus using a network (Internet or the like), management information which is recorded on the information storage medium and is uniquely determined so far can be updated.

Furthermore, for example, by distributing the playback control information that controls playback of video objects via the Internet or the like after the disc is prepared, or by adding the aforementioned playback control information to the video disc which is prepared once, a new disc can be manufactured without re-manufacturing the whole disc.

More specifically, video objects which cannot be played back upon shipping of a DVD-Video disc can be played back under a specific condition using playback control information delivered via the Internet, or bugs remaining upon shipping the DVD-Video disc can be controlled using the playback control information, thus correcting problems.

Put differently, according to an embodiment of the invention, upon production of an information storage medium (ROM-based disc) or after its sales, a scheme that allows the user to freely change and enjoy the playback sequence of advanced objects and/or expanded video objects using playback control information implemented by a Markup language or the like can be provided.

The data area (12) may be configured to store a primary object set (or Primary Video Set) which is a set of one or more primary objects whose relationship between the playback times and recording positions is managed by one or more time maps (TMAP), and form a main picture stream, and secondary objects (or Secondary Video Set) which are objects whose relationship between the playback times and recording positions is managed by individual time maps (TMAP) and form another picture stream which can be simultaneously played back with the main picture stream.

Note that playback of the one or more primary objects can be managed using the playback times based on the one or more time maps, and that of the secondary object which can be played by simultaneously with (or in synchronism with) an arbitrary one of these primary objects can be managed using the playback time based on the individual time map. In this case, the playback timing and/or playback period with the secondary object which is played back simultaneously with (in synchronism with) a given primary object can be freely set using the predetermined language (Markup language or the like).

In each of the aforementioned embodiments described above with reference to the accompanying drawings, information elements are arranged in the illustrated order. This arrangement corresponds to the order indicating which information element is to be loaded first by the player upon playback of disc 1.

The invention is not limited to the aforementioned specific embodiments, but can be embodied by variously modifying constituent elements without departing from the scope of the invention when it is practiced at present or in the future. For example, the invention can be applied not only to DVD-ROM Video that has currently spread worldwide but also to recordable/reproducible DVD-VR (video recorder) whose demand is increasing in recent years. Furthermore, the invention can be applied to a reproduction system or a recording/reproduction system of next-generation HD-DVD or the like which will be spread in the near future.

Furthermore, various inventions can be formed by appropriately combining a plurality of used constituent elements disclosed in the respective embodiments. For example, some constituent elements may be omitted from all constituent elements disclosed in the respective embodiments. Furthermore, constituent elements across different embodiments may be appropriately combined.

By practicing the invention, an information storage medium and its playback apparatus (or playback/reproduction method) which can realize colorful expressions and can create attractive contents can be provided.

## Claims

1. An information storage medium (1) comprising a data area (12) storing a video data recording area (20) that includes a management area (30) which records management information (HDVMG) and an object area (40, 50) which records objects (HDVTS, AHDVTS) to be managed by the management information, and an advanced content recording area (21) which includes information (21A - 21E) different from recording contents (30 - 50) of the video data recording area (20), and a file information area (11) that stores file information corresponding to the recording contents of the data area (12),
**characterized in that** the data area (211A, 215A) is configured to store playlist information (Object Mapping Information; Playback Sequence, or the like) which is played back or reproduced first when the information storage medium stores the advanced content,
the playlist information is configured to include object mapping information which is included in each title of the object to be played back and is mapped on a title timeline, and playback information (Playback Sequence) for each title described based on the timeline, and
the object mapping information is configured to describe timings (Loadstart '100' in FIG. 3, Loadstart '200' in FIG. 5, and the like) on the timeline to be loaded into a playback system (a Data Cache thereof) for each predetermined information unit (Application or Object).

2. A recording method using the information storage medium as defined in claim 1, **characterized by** recording the playlist information (FIG. 3 and the like) in the advanced content recording area (211A, 215A).

3. A playback or reproduction method using an information storage medium as defined in claim 1, **characterized by**
playing back or reproducing a file including the playlist information that includes descriptions of the timings (Loadstart '100' in FIG. 3, Loadstart '200' in FIG. 5, etc.) on the timeline from the data area (check descriptions in playlist in FIG. 2); and
playing back or reproducing the object from the data area based on the playlist information (playback processing in FIG. 2).

4. A playback or reproduction apparatus (FIG. 19 or 20) using an information storage medium as defined in claim 1, **characterized by** comprising:
means for reproducing a file including the playlist information that includes descriptions of the timings on the timeline from the data area; and
means for reproducing the object from the data area based on the playlist information.
